(19) Europäisches Patentamt
European Patent Office
Office européen des brevets

(11) EP 4 252 945 A1

(12) **EUROPEAN PATENT APPLICATION**
published in accordance with Art. 153(4) EPC

(43) Date of publication:
**04.10.2023 Bulletin 2023/40**

(21) Application number: **20963623.2**

(22) Date of filing: **30.11.2020**

(51) International Patent Classification (IPC):
***B23C 5/10*** *(2006.01)*

(52) Cooperative Patent Classification (CPC):
**B23C 5/10**

(86) International application number:
**PCT/JP2020/044553**

(87) International publication number:
**WO 2022/113360 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **OSG Corporation**
**Aichi 442-0005 (JP)**

(72) Inventors:
• UKEI, Shigetoshi
**Toyokawa-shi, Aichi 441-1231 (JP)**
• ISOBE, Masataka
**Toyokawa-shi, Aichi 441-1231 (JP)**

(74) Representative: **TBK**
**Bavariaring 4-6**
**80336 München (DE)**

(54) **END MILL**

(57) This end mill comprises three types of cutting edge, a curved tooth BS, a left hand helical tooth BL, and a right hand helical tooth BR, as three peripheral cutting edges, adjacent peripheral cutting edges being constituted from different types of cutting edge. Therefore, the spacing between adjacent peripheral cutting edges is irregular and continuously changes in the axial direction, and the direction of cutting force varies. Consequently, resonance is suppressed, and an anti-vibration effect is adequately attained. Moreover, providing the curved tooth BS results in the more adequate suppression of the occurrence of burrs in comparison to when only the right hand helical tooth BR and the left hand helical tooth BL are present, and chatter vibration in the plate thickness direction of a workpiece is reduced as the cutting force acts inward on a curved shape. Furthermore, since the curved tooth BS has a smooth curved shape, the accumulation of chips is reduced, and restrictions on processing conditions are relaxed in comparison to a herringbone shape.

FIG.2

| PERSPECTIVE VIEW | BS | BL | BR |
| | CURVED TOOTH | LEFT-HANDED HELICAL TOOTH | RIGHT-HANDED HELICAL TOOTH |

EP 4 252 945 A1

**Description**

TECHNICAL FIELD

The present invention relates to an end mill, and particularly, to new techniques effective to ensure anti-vibration performance and suppress burr and delamination.

BACKGROUND ART

A carbon fiber reinforced material such as CFRP (carbon fiber reinforced plastics) and CFRTP (carbon fiber reinforced thermoplastics) has a problem of being easily susceptible to burr and delamination (hereinafter referred to as "burr or the like"). On the other hand, there is proposed a so-called herringbone-shaped end mill of alternate helical teeth in which two types of peripheral cutting edges are alternately arranged in an axial direction of the end mill, wherein the two types of peripheral cutting edges are opposite in a twist direction (see Patent Document 1). In this herringbone-shaped end mill, it is possible to cause the peripheral cutting edges to cut both of upper and lower side surfaces of a workpiece (work material) with acute angles, thereby suppressing occurrence of the burr or the like. Further, there is proposed also an end mill in which the peripheral cutting edges are defined by right-handed helical teeth twisted rightward and left-handed helical teeth twisted leftward, wherein the right-handed helical teeth and the left-handed helical teeth are arranged alternately in a circumferential direction of the end mill (see Patent Document 2).

PRIOR ART DOCUMENT

PATENT DOCUMENT

Patent Document 1: JP 2013-22657A
Patent Document 2: WO 2009/122937 A1

DISCLOSURE OF THE INVENTION

OBJECT TO BE ACHIEVED BY THE INVENTION

However, in the end mill of Patent Document 1, chips are likely to stay due to complicated shapes of portions in which the two types of peripheral cutting edges, which are opposite in the twist direction, overlap with each other, so that machining condition is likely to be restricted. In the end mill of Patent Document 2 in which the right-handed helical teeth and the left-handed helical teeth are alternately arranged in the circumferential direction, each of the peripheral cutting edges defined by the helical teeth includes a part that is to be caused to cut a surface of a workpiece with an obtuse angle, so that there are problems that the burr or the like cannot be sufficiently effectively suppressed, and that chatter vibration is likely to be caused because the right-handed helical teeth and the left-handed helical teeth apply forces acting in directions opposite to each other in a thickness direction of the workpiece.

The present invention was made in view of the background discussed above. It is therefore an object of the present invention to provide a new end mill effective to assure anti-vibration performance and suppress burr or the like.

MEASURES FOR SOLVING THE PROBLEM

For attaining this object, a first invention is, in an end mill comprising a plurality of peripheral cutting edges, characterized in that (a) the peripheral cutting edges are defined by three types of teeth including a right-handed helical tooth that is twisted rightward, a left-handed helical tooth that is twisted leftward, and a curved tooth which is twisted in a direction reversed right and left on a way thereof and which has a curved shape curved in an arcuate or arched manner in a development view of an outer circumferential surface of the end mill around an axis such that a corresponding one of the peripheral cutting edges is provided on a concave side of the curved shape, and (b) each adjacent pair of the peripheral cutting edges adjacent to each other are defined by the respective teeth that are different in type from each other.

A second invention is, in the end mill of the first invention, characterized in that (a) the right-handed helical tooth has a helix angle ranging from 1° to 15°, and (b) the left-handed helical tooth has a helix angle ranging from 1° to 15°. It is noted that the helix angle is positive irrespective of whether the helical tooth is twisted rightward or leftward, and represents an amount of inclination of the tooth with respect to a direction parallel to an axis of the tool.

A third invention is, in the end mill of the first or second invention, characterized in that the peripheral cutting edges are defined by one kind of teeth selected from among normal teeth, nicked teeth and roughing teeth. It is noted that each of the normal teeth is a standard and smooth tooth which include neither a nicked portion (grooved portion) nor a roughing portion (corrugated portion) and which has a constant outside diameter.

A fourth invention is, in the end mill of any one of the first through third inventions, characterized in that, where it is assumed that each of the peripheral cutting edges conceptually extends in an axial direction of the end mill with a constant helix angle or a constant curvature, the peripheral cutting edges are equally spaced in a circumferential direction, in an equally spaced position that is located in a region between a position that is distant from a bottom-cutting-edge side end of the peripheral cutting edges toward a distal end side of the peripheral cutting edges by 1/4 of a tooth length and a position that is distant from a shank-portion side end toward a shank-portion side by 1/4 of the tooth length.

A fifth invention is, in the end mill of any one of the first through fourth inventions, characterized in that an angle difference between a helix angle of the right-handed helical tooth and a helix angle of the left-handed helical tooth is within ± 5°.

A sixth invention is, in the end mill of any one of the first through fifth inventions, characterized in that each of at least one of a plurality of bottom cutting edges, which are contiguous to the respective peripheral cutting edges and are provided in a distal end portion of the end mill, includes a center edge portion that reaches a vicinity of the axis.

A seventh invention is, in the end mill of any one of the first through sixth inventions, characterized in that a number of the peripheral cutting edges is not smaller than three and is not larger than six.

An eighth invention is, in the end mill of any one of the first through seventh inventions, characterized in that a surface of a tooth portion, which is provided with the peripheral cutting edges, is covered with a diamond coating.

A ninth invention is, in the end mill of any one of the first through eighth inventions, characterized in that the end mill is made of a cemented carbide.

EFFECTS OF THE INVENTION

In the end mill constructed as described above, the peripheral cutting edges are defined by the three types of teeth including the right-handed helical tooth, the left-handed helical tooth and the curved tooth, such that each adjacent pair of the peripheral cutting edges adjacent to each other are defined by the respective teeth that are different in type from each other. Therefore, an interval between each adjacent pair of the peripheral cutting edges is not constant and is continuously changed in the axial direction, and a direction of a cutting force varies among the peripheral cutting edges, so that it is possible to suppress resonance and to appropriately obtain anti-vibration effect. Further, owing to provision of the curved tooth, as compared with a case in which only the right-handed helical tooth and the left-handed helical tooth are provided, occurrence of burr or the like is further appropriately suppressed. Sill further, since the cutting force applied by the curved tooth is caused to act inwardly of the curved shape, chatter vibration of a workpiece in its thickness direction is suppressed. Moreover, since the curved tooth has the smoothly curved shape, retention of chips is more suppressed and restriction to a machining condition is more relaxed, for example, as compared with a herringbone-shaped end mill.

In the second invention, the helix angle of the right-handed helical tooth ranges from 1° to 15°, and the helix angle of the left-handed helical tooth ranges from 1° to 15°, so that it is possible to appropriately obtain the anti-vibration effect, an effect of suppressing the burr or the like and an effect of suppressing the chatter vibration.

That is, if the helix angles were increased, the burr or the like would be more likely to occur and the chatter vibration would be increased, so that it would be difficult to appropriately suppress them in spite to the presence of the arc tooth.

In the third invention, the peripheral cutting edges are defined by one kind of teeth selected from among the normal teeth, the nicked teeth and the roughing teeth. It is possible to employ an end mill having teeth whose shape is dependent on purpose such as a finishing operation, a semi-finishing operation and a roughing operation, and also a material of the workpiece.

In the fourth invention, the equally spaced position, in which the peripheral cutting edges are equally spaced in the circumferential direction, is located in a region between the position that is distant from the bottom-cutting-edge side end of the peripheral cutting edges toward the distal end side of the peripheral cutting edges by 1/4 of the tooth length in the tool axial direction and a position that is distant from the shank-portion side end toward the shank-portion side by 1/4 of the tooth length in the tool axial direction. It is possible to obtain a better machined surface roughness as compared with a case in which the equally spaced position is located outside the above-describe region.

In the fifth invention, the angle difference between the helix angle of the right-handed helical tooth and the helix angle of the left-handed helical tooth is within ± 5°. As compared with a case in which the angle difference exceeds ±5°, a flank wear width is made smaller so that it is possible to ensure a tool life while obtaining the anti-vibration effect owing to an unequal spacing and the effect of suppressing the burr or the like owing to the curved tooth.

In the sixth invention, at least one of the plurality of bottom cutting edges, which are contiguous to the respective peripheral cutting edges and are provided in the distal end portion of the end mill, includes the center edge portion that reaches a vicinity of the axis. The provision of the center edge portion makes it possible to perform a plunging operation thereby increasing versatility of the tool.

In the seventh invention, the number of the peripheral cutting edges is not smaller than three and is not larger than six. The present invention, in which the peripheral cutting edges are defined by the three types of teeth including the right-handed helical tooth, the left-handed helical tooth and the curved tooth, is advantageously applied thereto.

In the eighth invention, the surface of the tooth portion, which is provided with the peripheral cutting edges, is covered with the diamond coating, so that an excellent cutting durability can be obtained.

In the ninth invention, the end mill is made of the cemented carbide, so that an excellent cutting durability can be obtained.

BRIEF DESCRIPTION OF DRAWINGS

FIG. 1 is a perspective view showing an end mill according to an embodiment of the present invention.

FIG.2 is a set of views for explaining shapes of three peripheral cutting edges provided in the end mill of FIG. 1.

FIG. 3 is a set of views for explaining a curved shape of a curved tooth of FIG.2.

FIG. 4 is a set of photographs showing, by way of examples, various forms of the curved shape of the curved tooth.

FIG. 5 is a set of views showing, by way of examples, other forms of the curved tooth including an arc tooth of FIG. 3.

FIG. 6 is a view showing, by way of examples, combinations of three types of teeth of a three-flute end mill, which include an arc tooth, a right-handed helical tooth and a left-handed helical tooth.

FIG. 7 is a view showing, by way of examples, combinations of three types of teeth of a four-flute end mill, which include an arc tooth, a right-handed helical tooth and a left-handed helical tooth.

FIG. 8 is a view showing, by way of examples, combinations of three types of teeth of a five-flute end mill, which include an arc tooth, a right-handed helical tooth and a left-handed helical tooth.

FIG. 9 is a view showing, by way of examples, combinations of three types of teeth of a six-flute end mill, which include an arc tooth, a right-handed helical tooth and a left-handed helical tooth.

FIG. 10 is a set of views showing, by way of example, a case in which a peripheral cutting edge of an end mill is constituted by a nicked tooth or a roughing tooth, as compared with a case in which the peripheral cutting edge is constituted by a normal tooth.

FIG. 11 is a view for explaining a circumferential arrangement of three types of teeth consisting of an arc tooth, a right-handed helical tooth and a left-handed helical tooth, of a three-flute end mill.

FIG. 12 is a set of views for explaining presence or absence of a center edge portion in each of bottom cutting edges of a three-flute end mill.

FIG. 13 is a set of views for explaining a direction and a magnitude of a cutting force applied by each of three peripheral cutting edges of an end mill and also a cutting manner of each of the three peripheral cutting edges, by comparing a tool of the present invention and a conventional tool that does not include a curved tooth.

FIG. 14 is a set of views for explaining misalignment of a conventional herringbone-shaped tool, relative to a work material.

FIG. 15 is a view for explaining peripheral cutting edges of five kinds of test samples Nos. 1-5, which were used when cutting tests were performed.

FIG. 16 is a view for explaining a resultant force of resistance values that is measured in the cutting tests.

FIG. 17 is a view for explaining a positional relationship between a work material and a tool.

FIG. 18 is a view for explaining an amplitude of the resultant force of resistance values measured in the cutting tests.

FIG. 19 is a view for explaining a machining condition in the cutting tests.

FIG.20 is a view for explaining values of the amplitude of the resultant force of resistance values measured in cutting operations performed in the machining condition of FIG. 19, and ratios.

FIG.21 is a view showing the values of the amplitude of FIG.20 by a graph in a comparative manner.

FIG.22 is a view for explaining three kinds of test samples Nos. 1-3 that are different from one another in terms of shapes of peripheral cutting edges.

FIG.23 is a view for explaining machining conditions in cutting tests performed by using the test samples Nos. 1-3 of FIG.22.

FIG.24 is a set of views for explaining the shapes of the peripheral cutting edges of the test samples Nos. 1-3, and the test results about occurrence of burr.

FIG.25 is a view for explaining six kinds of test samples Nos. 1-6 that are different from one another in terms of helix angles $\alpha$, $\beta$ of right-handed and left-handed helical teeth.

FIG.26 is a view for explaining a machining condition in cutting tests performed by using the test samples Nos. 1-6 of FIG.25.

FIG.27 is a view for explaining results of the cutting tests with various values of a cutting velocity in the machining condition of FIG.26.

FIG.28 is a set of photographs showing, by way of example, chips generated when cutting operations were performed at the cutting velocity of 400 m/min by the test samples Nos.1 and 2 in the cutting tests of FIG.26.

FIG.29 is a view for explaining three kinds of test samples Nos.1-3.

FIG. 30 is a view for explaining a machining condition in cutting tests performed by using the test samples Nos.1-3 of FIG.29.

FIG. 31 is a set of views for explaining results of the cutting tests performed in the machining condition of FIG.30, by comparing in terms of a vibration waveform of a resultant force of resistance values, a maximum value and an amplitude of the resultant force, a ratio and a photograph of burr.

FIG. 32 is a view for explaining five kinds of test samples Nos.1-5 that are different from one another in terms of an equally spaced position of the peripheral cutting edges.

FIG. 33 is a view for specifically explaining of the equally spaced position of FIG. 32.

FIG. 34 is a view for explaining a machining condition in cutting tests performed by using the test samples Nos.1-3 of FIG. 32.

FIG. 35 is a view for explaining results of the tests of FIG. 34, and showing measurement results of machined surface roughness.

FIG. 36 is a view showing values of the machined surface roughness of FIG. 35 by a graph in a comparative manner.

FIG. 37 is a view for explaining four kinds of test samples Nos.1-4 that are different from one another in terms of an angle difference $\delta$ between helix angles of right-handed and left-handed helical teeth.

FIG. 38 is a view for specifically explaining shapes of teeth of the four kinds of test samples Nos. 1-4 of FIG. 37.

FIG. 39 is a view for explaining a machining condition in cutting tests performed by using the test samples Nos.1-4 of FIG. 37.

FIG. 40 is a view for explaining results of cutting tests performed in the machining condition of FIG. 39, and showing a flank wear width by a graph in a comparative manner.

MODES FOR CARRYING OUT THE INVENTION

The end mill of the present invention may be driven and rotated either in clockwise or counterclockwise direction as seen from side of the shank portion, for performing a cutting operation. Where the end mill is to be driven and rotated in the clockwise direction as seen from side of the shank portion for performing a cutting operation, the curved tooth is formed to have a curved shape so as to be twisted leftward in its shank-portion side portion and so as to be twisted rightward in its bottom-cutting-edge side portion. Where the end mill is to be driven and rotated in the counterclockwise direction as seen from side of the shank portion for performing a cutting operation, the curved tooth is formed to have a curved shape so as to be twisted rightward in its shank-portion side portion and so as to be twisted leftward in its bottom-cutting-edge side portion. Although being widely applied to an end mill having three to six teeth, the present invention can be applied also to an end mill having seven or more teeth.

It is preferable that the helix angle of each of the right-handed and left-handed helical teeth is within a range from 1° to 15°. However, the present invention is applicable also to an end mill in which the helix angle is less than 1° or larger than 15°. Where it is assumed that each of the peripheral cutting edges conceptually extends the tool axial direction with a constant helix angle or a constant curvature, it is preferable that the equally spaced position in which the peripheral cutting edges are equally spaced in the circumferential direction, is located between a position that is distant from the bottom-cutting-edge side end of the peripheral cutting edges toward the distal end side by 1/4 of the tooth length in the tool axial direction and a position that is distant from the shank-portion side end of the peripheral cutting edges toward the shank-portion side by 1/4 of the tooth length in the tool axial direction. It is more preferable that the equally spaced position is located between the bottom-cutting-edge side end of the peripheral cutting edges and a position that is distant from the bottom-cutting-edge side end toward the shank-portion side by a distance ranging from 1/4 of the tooth length to 3/4 of the tooth length. However, the equally spaced position may be located in a position distant from the bottom-cutting-edge side end toward the distal end side by more than 1/4 of the tooth length, or in a position distant from the shank-portion side end toward the shank-portion side by more than 1/4 of the tooth length. Moreover, the peripheral cutting edges may be arranged so as to be unequally spaced. It is preferable that the angle difference between the helix angle of the right-handed helical tooth and the helix angle of the left-handed helical tooth is within ± 5°. However, the angle difference may exceed ±5°. It is preferable that at least one of the plurality of bottom cutting edges includes the center edge portion. However, none of the bottom cutting edge may include the center edge portion.

In a development view of an outer circumferential surface of the end mill, the curved tooth having the curved shape is defined by an arc that consists of, for example, a part of a perfect circle in the development view. However, the arc defining the curved shape of the curved tooth may consist of a part of an ellipse. Further, the curved shape of the curved tooth may be defined by a plurality of arcs having respective curvatures that are different from each other, or may be defined by an arc in which a straight line portion is provided in its way. That is, the curved shape of the curved tooth may take any one of various forms, as long as the twist direction is changed irreversibly and smoothly from one side to the other such that the curved shape is changed from rightward twist to leftward twist or from the leftward twist to the rightward twist between the shank-portion side end and the bottom-cutting-edge side end. Such a curved tooth can be formed by, for example, a grinding operation using a grinding machine having five axes or the like.

It is preferable that the most recessed point P1 of the curved shape in the development view of the curved tooth is located in a region extending from the bottom-cutting-edge side end P2 in the tool axial direction by a distance corresponding to 5%-95% of the tooth length. However, the most recessed point P1 may be located outside the above-described region as long as the twist direction of the curved tooth is reversed at least in its opposite end portions. A circumferential distance a between the most recessed point P1 and the bottom-cutting-edge side end P2 and another circumferential distance b between the most recessed point P1 and the shank-portion side end P3 are both preferably within a range from 0.0002 times as large as the tooth length to 0.1300 times as large as the tooth length. However, each of the two circumferential distances a, b may be smaller than 0.0002 times as large as the tooth length or larger than 0.1300 times as large as the tooth length. The curvature of the curved tooth in vicinity of the bottom-cutting-edge side end P2 and the curvature of the curved tooth in vicinity of the shank-portion side end P3 are dependent on the above-described two circumferential distances a, b, and are increased as the two circumferential distances a, b are increased, in general. Each of the two circumferential distances a, b is preferably within a range from 0.08mm to 1. 19mm, for example.

The nicked tooth or the roughing tooth may be provided with a raised/recessed portion such as a nicked portion (grooved portion) and a roughing portion (corrugated portion) such that the raised/recessed portion extends throughout the entire tooth length. However, the raised/recessed portion does not have to extend throughout the entire tooth length, but may have a length ranging from 5% of the tooth length to 65% of the tooth length and may be provided in a region extending by a distance corresponding to 70% of the tooth length in the tool axial direction, such that the region extends from the shank-portion side end toward the side of the bottom cutting edges in the tool axial direction, or such that the region extends from the bottom-cutting-edge side end toward the side of the shank portion in the tool axial direction, or such that the region extends from a center of the tooth length in directions opposite to each other in tool axial direction by a distance corresponding to 35% of the tooth length, for example. It is noted that the raised/recessed portion may have a length smaller than 5% of the tooth length or a length larger than 65% of the tooth length.

The end mill of the present invention is used advantageously for trimming/cutting operations (outer periphery cutting operations) performed to FRP (fiber reinforced plastics) such as CFRP (carbon fiber reinforced plastics) and CFRTP (carbon fiber reinforced thermoplastics), for example. However, the end mill of the present invention may be used also for cutting operations performed to another work material such as a steel material. As a material forming the end mill, although a cemented carbide or a high-hardness sintered body is preferably used, other hard tool materials such as a high-speed tool steel may be used, too. Moreover, the end mill may be covered with a hard coating, as needed, for increasing a cutting durability. Although the hard coating is preferably constituted by a diamond coating, it may be constituted also by another hard coating such as an intermetallic compound.

EMBODIMENT

There will be described embodiment of the present invention in details with reference to drawings. It is noted that figures of the drawings are simplified or deformed as needed, and each portion is not necessarily precisely depicted in terms of dimension ratio, shape, angle, etc, for easier understanding of the embodiment.

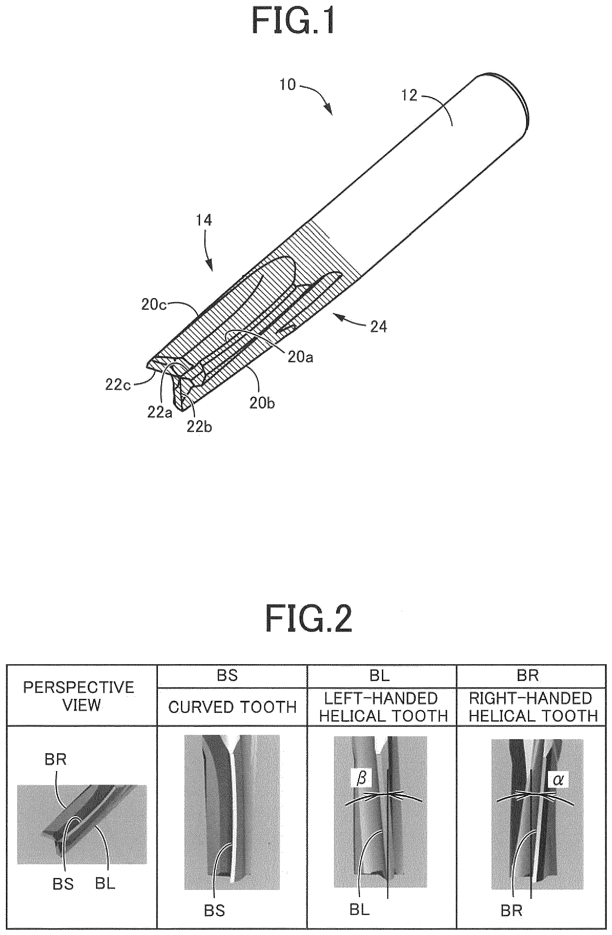

FIG.1 is a perspective view showing an end mill 10 according to an embodiment of the present invention. The end mill 10 includes a shank portion 12 and a tooth portion 14 that are coaxial with each other. The tooth portion 14 is provided with three flutes whereby three peripheral cutting edges 20a, 20b, 20c (hereinafter simply referred to as "peripheral cutting edges 20" unless they are to be distinguished from one another). Bottom cutting edges 22a, 22b, 22c (hereinafter simply referred to as "bottom cutting edges 22" unless they are to be distinguished from one another) are provided to be contiguous to distal ends of the respective three peripheral cutting edges 20a, 20b, 20c. The end mill 10 is to be rotated in clockwise direction as seen from side of the shank portion 12, for performing a cutting operation. This end mill 10 is made of a cemented carbide, and a surface of the tooth portion 14 is covered with a diamond coating 24 as a hard coating. The diamond coating 24 is monocrystalline diamond or polycrystalline diamond. The diamond coating 24 is represented by a hatched area in FIG. 1.

The three peripheral cutting edges 20 are defined by three types of teeth BS, BL, BR that are shown in FIG.2, such that each adjacent pair of the peripheral cutting edges 20 adjacent to each other are defined by the respective teeth that are different in type from each other. In the three-flute end mill 10, the three peripheral cutting edges 20 are defined by the three types of teeth BS, BL, BR. A twist direction of the tooth BS is right-left reversed on the way. The tooth BS has a curved shape curved in an arcuate or arched manner in a development view of an outer circumferential surface of the end mill 10 around an axis, such that a corresponding one of the peripheral cutting edges 20 is provided on a concave side of the curved shape. In the end mill 10 of FIG.1, the peripheral cutting edge 20a corresponds to the curved tooth BS. The tooth BL is a left-handed helical tooth that is twisted leftward by a helix angle $\beta$ that preferably ranges from 1° to 15°. In the end mill 10 of FIG.1, the peripheral cutting edge 20b corresponds to the left-handed helical tooth BL. The tooth BR is a right-handed helical tooth that is twisted leftward by a helix angle $\alpha$ that preferably ranges from 1° to 15°. In the end mill 10 of FIG.1, the peripheral cutting edge 20c corresponds to the right-handed helical tooth BR. Further, an angle difference $\delta$ ($=\alpha-\beta$) between the helix angle $\alpha$ of the right-handed helical tooth BR and the helix angle $\beta$ of the left-handed helical tooth BL is within ± 5°.

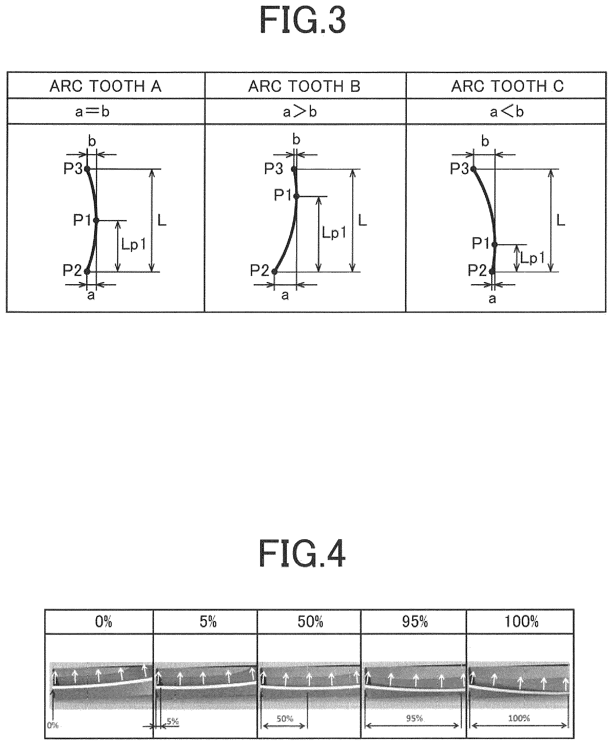

The curved tooth BS is formed, for example, as arc teeth A-C shown in FIG. 3. FIG. 3 is a set of views each of which is in a development view of the outer circumferential surface of the end mill 10 around the axis of the end mill 10. Each of the arc teeth A-C is an arc tooth wherein its curved shape in the development view is constituted by a part of a perfect circle. Where the most recessed point (recessed point) of the curved shape, namely, the rearmost point of the curved shape in a cutting rotation direction as one of circumferentially opposite directions is represented by "P1", a bottom-cutting-edge side end in a tool axial direction is represented by "P2", and a shank-portion side end in the tool axial direction is represented by "P3 ", it is preferable that a circumferential width (bottom-cutting-edge side width) a, which is a distance between the recessed point P1 and the bottom-cutting-edge side end P2 in the circumferential direction, and a circumferential width (shank-portion side width) b, which is a distance between the recessed point P1 and the shank-portion side end P3 in the circumferential direction, are both set in a range not smaller than a tooth length L×0.0002 and not larger than the tooth length L×0.1300, as indicated in expressions (1), (2) given below. A specific value of the circumferential widths a, b is set in a range from 0.08mm to 1. 19mm, for example. Further, a tool axial-direction dimension Lp1, which is a distance from the bottom-cutting-edge side end P2 to the recessed point P1 is preferably set in a range from 5% of the tooth length L to 95% of the tooth length L, as indicated in expression (3) given below. In the present embodiment, each of the arc teeth A-C is twisted rightward in the bottom-cutting-edge side end P2, and is twisted leftward in the shank-portion side end P3. Each of the arc teeth A-C has the curved shape in the form of arc in the development view, so that a position of a center of the arc is coincident with the recessed point P1 in the tool axial direction. Further, in the arc tooth A, the circumferential widths a, b are equal to each other (a=b). In the arc tooth B, the circumferential width a is larger than the circumferential width b (a>b). In the arc tooth C, the circumferential width a is smaller than the circumferential width b (a<b).

$$L \times 0.0002 \leq a < L \times 0.1300 \ldots\ldots\ldots(1)$$

$$L \times 0.0002 \leq b \leq L \times 0.1300 \ldots\ldots\ldots(2)$$

$$L \times 0.05 \leq Lp1 \leq L \times 0.95 \quad \ldots\ldots\ldots(3)$$

FIG. 4 is a set of photographs show the shape of the tooth in cases in which a ratio of the tool axial-direction dimension Lp1 to the tooth length L is 0%, 5%, 50%, 95% and 100%, respectively, wherein a left-side end of each of the photographs corresponds to a distal end side, i.e., side of the bottom cutting edges 22. Where the dimension Lp1 to the tooth length L is 0%, the tooth is a straight tooth parallel to the axis in the bottom-cutting-edge side end P2, so that it is not possible to appropriately obtain an effect to suppress burr or the like on the side of the bottom cutting edges 22. Where the dimension Lp1 to the tooth length L is 100%, the tooth is a straight tooth parallel to the axis in the shank-portion side end P3, so that it is not possible to appropriately obtain an effect to suppress burr or the like on the side of the shank portion 12. In FIG. 4, a white arrow represents a cutting force applied by each portion of the tooth.

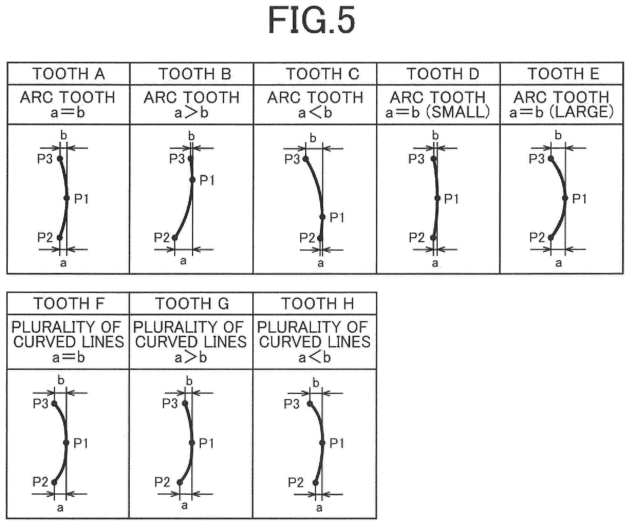

FIG. 5 is a set of views for explaining teeth A-H as other examples of the curved tooth BS of FIG.2, wherein the teeth A-C are identical with the arc teeth A-C of FIG. 3, respectively. In the tooth D, the bottom-cutting-edge-side circumferential width a and the shank-portion-side circumferential width b are equal to each other as in the tooth A, and the widths a, b are smaller than those of the tooth A because a curvature of the arc is smaller, namely, a radius of the arc is larger than in the tooth A. In the tooth E, the bottom-cutting-edge-side circumferential width a and the shank-portion-side circumferential width b are equal to each other as in the tooth A, and the widths a, b are larger than those of the tooth A because a curvature of the arc is larger, namely, a radius of the arc is smaller than in the tooth A. In the tooth F in which the curved shape is defined by a plurality of curved lines, such that the curvature of the arc in vicinity of the recessed point P1 is equal to the curvature of the arc in the tooth A, and such that the curvature of the arc in vicinities of the bottom-cutting-edge side end P2 and the shank-portion side end P3 is larger than the curvature of the arc in the tooth A, so that the bottom-cutting-edge-side circumferential width a and the shank-portion-side circumferential width b are equal to each other, and the widths a, b are large than those of the tooth A. In the tooth G in which the curved shape is defined by a plurality of curved lines, such that the curvature of the arc in vicinity of the bottom-cutting-edge side end P2 is larger than the curvature of the arc in the tooth A, and such that the shank-portion-side circumferential width b is equal to that of the tooth A while the bottom-cutting-edge-side circumferential width a is larger than that of the tooth A. In the tooth H, in contrary to in the tooth G, the curvature of the arc in vicinity of the shank-portion side end P3 is larger than the curvature of the arc in the tooth A, such that the bottom-cutting-edge-side circumferential width a is equal to that of the tooth A while the shank-portion-side circumferential width b is larger than that of the tooth A.

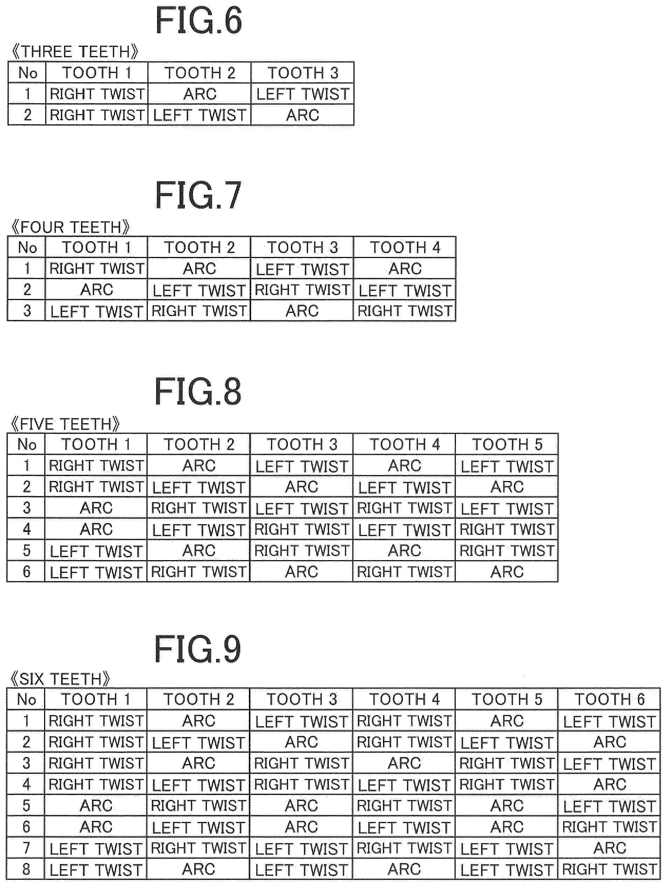

In the end mill 10 described above, a number of the peripheral cutting edges 20 does not have to be necessarily three, and the present invention is advantageously applied to the end mill 10 as long as the number of the peripheral cutting edges 20 is not smaller than three and not larger than six, as shown in FIGS. 6-9. Each of FIGS. 6-9 is a view showing, by way of example, a combination of the three types of teeth in the form of the curved tooth BS, left-handed helical tooth BL and right-handed helical tooth BR that are shown in FIG.2, wherein the curved tooth BS is indicated as "ARC", the left-handed helical tooth BL is indicated as "LEFT TWIST", and the right-handed helical tooth BR is indicated as "RIGHT TWIST". Nos. 1-8 show examples. The teeth 1-6 define the respective peripheral cutting edges 20. FIG. 6 shows example of three teeth, FIG. 7 shows examples of four teeth, FIG. 8 shows examples of five teeth, and FIG. 9 shows examples of six teeth. In any of these examples, each adjacent pair of the peripheral cutting edges 20 adjacent to each other are defined by the respective teeth that are different in type from each other. That is, as shown in FIGS. 6-9, none of "ARC", "LEFT TWIST" and "RIGHT TWIST" is not successive. The number of the peripheral cutting edges 20 of the end mill 10 may be seven or more, as long as each adjacent pair of the peripheral cutting edges 20 adjacent to each other are defined by the respective teeth that are different in type from each other.

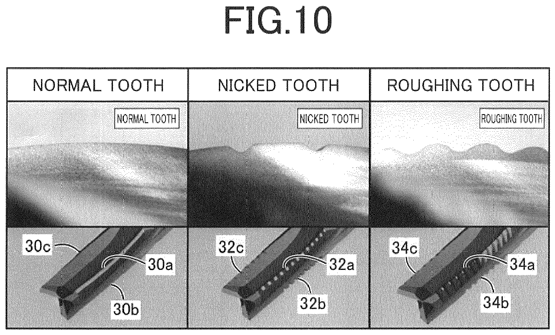

Although the peripheral cutting edges 20 of the end mill 10 may be defined by respective normal teeth 30a-30c (hereinafter simply referred to as "normal teeth 30" unless they are to be distinguished from one another) without a nicked portion nor a roughing portion, the peripheral cutting edges 20 may be defined also by respective nicked teeth 32a-32c (hereinafter simply referred to as "nicked teeth 32" unless they are to be distinguished from one another) or respective roughing teeth 34a-34c (hereinafter simply referred to as "roughing teeth 34" unless they are to be distinguished from one another). In FIG. 10, each of photographs in its upper row shows, in enlargement, a corresponding one of the normal tooth 30, nicked tooth 32 and roughing tooth 34, as seen from a side of its rake face, while each of photographs in its lower row shows the tooth portion 14, as seen from a diagonal side of its distal end. Any of those shown in FIG. 10 is the three-flute end mill 10. The normal teeth 30a-30c are constituted by the three types of teeth BS, BL, BR that are shown in FIG.2. The nicked teeth 32a-32c and the roughing teeth 34a-34c correspond to the normal teeth 30a-30c to which the nicked portions or roughing portions are added. Each of the nicked teeth 32a-32c and the roughing teeth 34a-34c may be provided with the nicked portion or roughing portion that extends over either an entirety or a part of the tooth length L. Where each of the nicked teeth 32a-32c and the roughing teeth 34a-34c is provided with the nicked or roughing portion that extends over a part of the tooth length L, the nicked or roughing portion may be provided in a center part of the tooth length L, on the side of the shank portion 12 or on the side of the bottom cutting edges 22. It is preferable that the nicked or roughing portion is provided in a manner or position that varies among the nicked teeth 32a-32c or roughing teeth 34a-34c. For example, each of the nicked tooth 32a and roughing tooth 34a shown in FIG. 10 is provided with the nicked or roughing portion that extends over the entirety of the tooth length L, each of the nicked tooth 32b and roughing tooth 34b shown in FIG. 10 is provided with the nicked or roughing portion that extends over a part on the side of the side of the shank portion 12, and each of the nicked tooth 32c and roughing tooth 34c shown in FIG. 10 is provided with the nicked or roughing portion that extends over a part on the side of the side of the bottom cutting edges 22. It is preferable that the nicked or roughing portion has a length ranging from 5% of the tooth length L to 65% of the tooth length L and is provided in a region extending by a distance corresponding to 70% of the tooth length L in the tool axial direction, such that the region extends from the shank-portion side end P3 toward the side of the bottom cutting edges 22 in the tool axial direction, or such that the region extends from the bottom-cutting-edge side end P2 toward the side of the shank portion 12 in the tool axial direction, or such that the region extends from a center of the tooth length L in directions opposite to each other in tool axial direction by a distance corresponding to 35% of the tooth length L. In each of the four-flute, five-flute and six-flute end mills 10 shown by way of example in FOGS. 7-9 and also seven-flute end mill 10 (not shown), too, the nicked or roughing tooth may be provided.

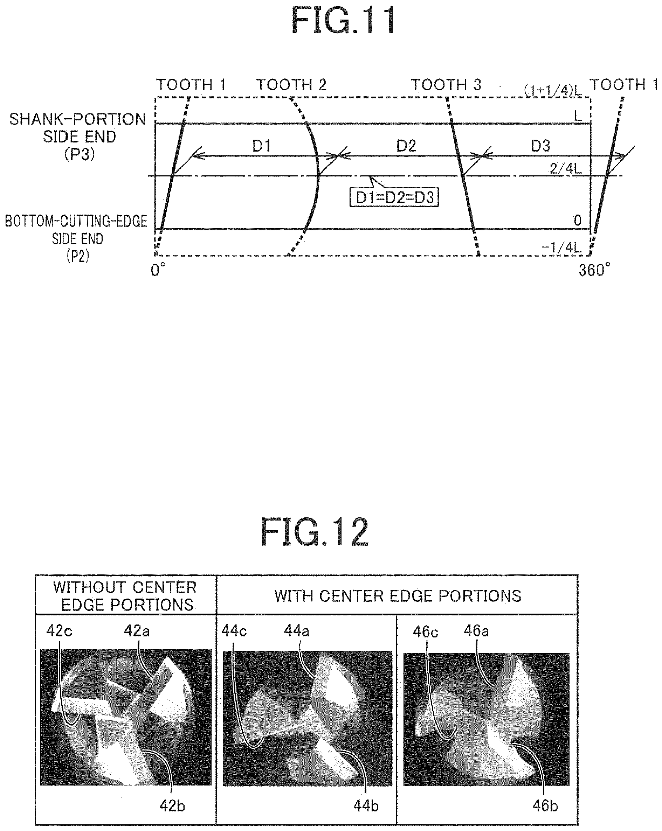

FIG. 11 is a development view showing the peripheral cutting edges 20 of the three-flute end mill 10, wherein the development view is obtained by developing the outer circumferential surface of the end mill 10 around the axis. In FIG.11, "TOOTH 2" of the arc tooth corresponds to the peripheral cutting edge 20a, "TOOTH 3" of the left-handed helical tooth corresponds to the peripheral cutting edge 20b, and "TOOTH 1" of the right-handed helical tooth corresponds to the peripheral cutting edge 20c. Where it is assumed that each of the teeth 1-3 conceptually extends (as indicated by broken lines) in the tool axial direction with a constant helix angle or a constant curvature, it is preferable that the teeth 1-3 are equally spaced in the circumferential direction in the equally spaced position that is located between a position that is distant from the bottom-cutting-edge side end P2 toward a distal end side by 1/4 of the tooth length L and a position that is distant from the shank-portion side end P3 toward a shank-portion side by 1/4 of the tooth length L. That is, it is preferable that the teeth 1-3 are located in respective circumferential positions such that the equally spaced position is located in a region from -0.25L to 1.25L where the bottom-cutting-edge side end P2 is a reference position and a direction toward a side of the shank portion 12 is positive. Specifically, the equally spaced position is a position in which distances D1, D2, D3 are equal to one another, where the teeth L1, L2 are spaced apart from each other by the distance D1, the teeth L2, L3 are spaced apart from each other by the distance D2, and the teeth L1, L3 are spaced apart from each other by the distance D3. In an example shown in FIG.11, the circumferential positions of the respective teeth 1-3 are determined such that that the equally spaced position is located in the center of the tooth length L, i.e., a position distant from the bottom-cutting-edge side end P2 by 0.5L (a half of the tooth length L).

The bottom cutting edges 22 of the end mill 10 are constituted as shown in FIG.12, for example. FIG.12 shows, in "WITHOUT CENTER EDGE PORTIONS", bottom cutting edges 42a-42c any of which does not include a center edge portion. FIG.12 shows, in "WITH CENTER EDGE PORTIONS", bottom cutting edges 44a-44c of its left photograph and bottom cutting edges 46a-46c of its right photograph. In the bottom cutting edges 44a-44c, the bottom cutting edge 44c as one of them includes the center edge portion that reaches a vicinity of the tool axis.

In the bottom cutting edges 46a-46c, every one of them includes the center edge portion that reaches a vicinity of the tool axis. Although the bottom cutting edges 22 of the end mill 10 shown in FIG.1 are constituted by the bottom cutting edges 46a-46c all of which include the respective center edge portions, the bottom cutting edges 22 may be constituted by any of the bottom cutting edges 42a-42c, bottom cutting edges 44a-44c and bottom cutting edges 46a-46c.

In the end mill 10 constructed as described above, the peripheral cutting edges 20 are defined by the right-handed helical tooth BR, the left-handed helical tooth BL and the curved tooth BS that are shown in FIG. 2, such that each adjacent pair of the peripheral cutting edges 20 adjacent to each other are defined by the respective teeth that are different in type from each other. Therefore, the interval between each adjacent pair of the peripheral cutting edges 20 is not constant and is continuously changed in the axial direction, and the direction of the cutting force varies among the peripheral cutting edges 20, so that it is possible to suppress the resonance and to appropriately obtain the anti-vibration effect. Further, owing to provision of the curved tooth BS, as compared with a case in which only the right-handed helical tooth BR and the left-handed helical tooth BL are provided, occurrence of the burr or the like is further appropriately suppressed. Sill further, since the cutting force applied by the curved tooth BS is caused to act inwardly of the curved shape, chatter vibration of a workpiece in its thickness direction is suppressed. Moreover, since the curved tooth BS has the smoothly curved shape, retention of chips is more suppressed and restriction to a machining condition is more relaxed, for example, as compared with a herringbone-shaped end mill.

Further, the helix angle $\alpha$ of the right-handed helical tooth BR ranges from 1° to 15°, and the helix angle $\beta$ of the left-handed helical tooth BL ranges from 1° to 15°, so that it is possible to appropriately obtain the anti-vibration effect, the effect of suppressing the burr or the like and the effect of suppressing the chatter vibration. That is, if the helix angles $\alpha$, $\beta$ were increased, the burr or the like would be more likely to occur and the chatter vibration would be increased, so that it would be difficult to appropriately suppress them in spite to the presence of the curved tooth BS.

Further, as shown in FIG. 10, the peripheral cutting edges 20 are defined by one kind of teeth selected from among the normal teeth 30, the nicked teeth 32 and the roughing teeth 34. It is possible to employ the end mill 10 having teeth whose shape is dependent on purpose such as a finishing operation, a semi-finishing operation and a roughing operation, and a material of the workpiece. Where the workpiece is CFRP or CFRTP, it can be used properly depending on the type of fiber and fiber volume content.

Further, the equally spaced position, in which the three peripheral cutting edges 20 (teeth 1-3) are equally spaced in the circumferential direction, is located in a region between the position that is distant from the bottom-cutting-edge side end P2 of the peripheral cutting edges 20 toward the distal end side of the peripheral cutting edges 20 by 1/4 of the tooth length L in the tool axial direction and a position that is distant from the shank-portion side end P3 toward side of the shank portion 12 by 1/4 of the tooth length L in the tool axial direction. In other words, the teeth 1-3 are located in respective circumferential positions such that the equally spaced position is located in a region from -0.25L to 1.25L where the bottom-cutting-edge side end P2 is the reference position and the direction toward the side of the shank portion 12 is positive, for example, as shown in FIG. 11. It is possible to obtain a better machined surface roughness as compared with a case in which the equally spaced position is located outside the above-describe region.

Further, the angle difference $\delta$ between the helix angle $\alpha$ of the right-handed helical tooth BR and the helix angle $\beta$ of the left-handed helical tooth BL is within $\pm 5°$. As compared with a case in which the angle difference exceeds $\pm 5°$, a flank wear width is made smaller so that it is possible to ensure a tool life while obtaining the anti-vibration effect owing to an unequal spacing and the effect of suppressing the burr or the like owing to the curved tooth BS.

Further, where at least one of the plurality of bottom cutting edges 22 includes the center edge portion that reaches a vicinity of the axis, as the bottom cutting edges 44a-44c or bottom cutting edges 46a-46c that are shown in FIG. 12, it is possible to perform a plunging operation thereby increasing versatility of the tool.

Further, the end mill 10 in which the peripheral cutting edges 20 are defined by the three types of teeth including the right-handed helical tooth BR, the left-handed helical tooth BL and the curved tooth BS, is advantageously applied to the case in which the number of the peripheral cutting edges 20 is not smaller than three and is not larger than six, for example, as shown in FIGS. 6-9.

For example, the end mill 10 is made of the cemented carbide, and the surface of the tooth portion 14, which is provided with the peripheral cutting edges 20, is covered with the diamond coating 24, so that an excellent cutting durability can be obtained.

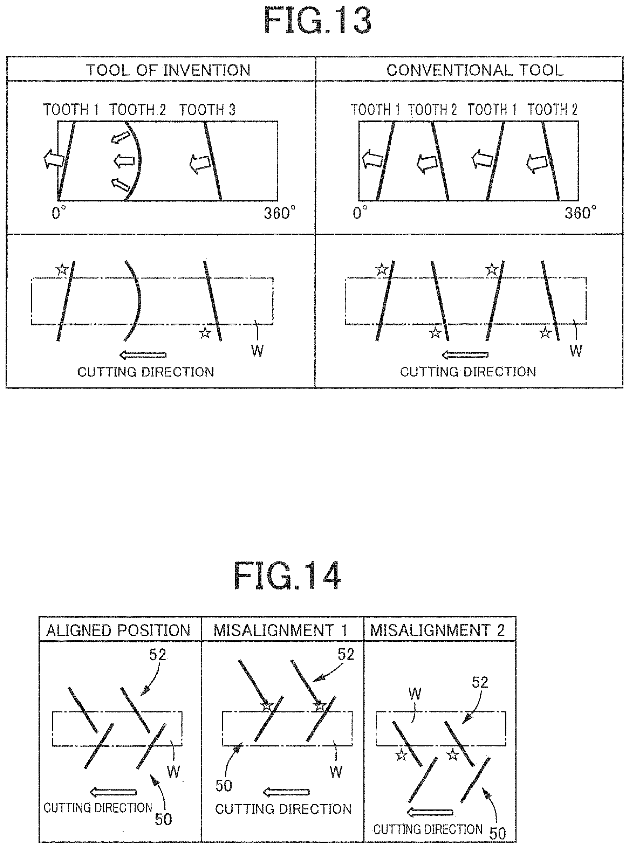

FIG.13 is a set of views showing trimming/cutting operations (outer periphery cutting operations) performed to a workpiece W by using a tool of the present invention and a conventional tool, wherein the tool of the present invention has the tooth 1 of the right-handed helical tooth, the tooth 2 of the curved tooth and the tooth 3 of the left-handed helical tooth as in the above-described end mill 10, while the conventional tool has four teeth consisting of teeth 1, 2 which are different in terms of the twist direction and which are alternately arranged in the circumferential direction, and wherein cutting forces applied by the teeth 1-3 and the teeth 1, 2 are indicated by white arrows in the development views. The views of FIG. 13 show also a positional relationship between each of the teeth and the workpiece W. In the views of upper row of FIG. 13, a direction of each of the white arrows represents a direction of a corresponding one of the cutting forces, and a width of each of the white arrows represents a magnitude of a corresponding one of the cutting forces. In the tooth 2 of the curved shape of the tool of the present invention, the direction and the magnitude of the cutting force varies among different parts of the tooth 2 in the axial direction. In the views of lower row of FIG. 13 in which the positional relationship between each of the teeth and the workpiece W is shown, the workpiece W is located on a front side (front side of the drawing sheet) while the tool having the teeth 1-3 or teeth 1-2 is located on a back side (back side of the drawing sheet). In the tool of the present invention, the cutting forces of the three teeth 1-3 are different in terms of the direction and magnitude, it is possible to suppress resonance and to appropriately obtain anti-vibration effect, as in the conventional tool having the teeth 1, 2 that are different in terms of the twist direction. In the conventional tool, the tooth 1 of the right-handed helical tooth defines an obtuse angle on an upper surface side of the workpiece W and the tooth 2 of the left-handed helical tooth defines an obtuse angle on a lower surface side of the workpiece W, so that the burr or the like is likely to occur in positions indicated by star marks. On the other hand, in the tool of the present invention, the tooth 2 of the curved shape is caused to cut both of upper and lower surfaces of the workpiece W with acute angles, whereby the burr or the like, which could occur when the upper and lower surfaces of the workpiece W is cut with obtuse angles by the teeth 1, 3, are removed so that occurrence of the burr or the like appropriately suppressed.

FIG. 14 shows a herringbone-shaped conventional tool of alternate helical tooth in which right-handed helical teeth 50 and left-handed helical teeth 52 are provided to be adjacent to one another so as to partially overlap in the tool axial direction. In this conventional tool shown in FIG. 14, chips are likely to stay in portions in which the helical teeth 50, 52 overlap so that there is a case in which the machining condition is restricted due to clogging of the chips. Further, where the cutting operation is performed by only the right-handed helical teeth 50 with misalignment of the tool from the workpiece P toward side of the left-handed helical teeth 52, as in "MISALIGNMENT 1", the burr or the like is likely to occur on the upper surface of the workpiece W, as indicated by the star marks. Where the cutting operation is performed by only the left-handed helical teeth 52 with misalignment of the tool from the workpiece P toward side of the right-handed helical teeth 50, as in "MISALIGNMENT 2", the burr or the like is likely to occur on the lower surface of the workpiece W, as indicated by the star marks. Further, where a curved part is to be cut by moving the tool through a machining programming, a run-up machining or run-down machining is required whereby tooth chipping is likely to occur in the tool.

Next, there will be described some cutting tests performed for specifically clarifying effects of the present invention.

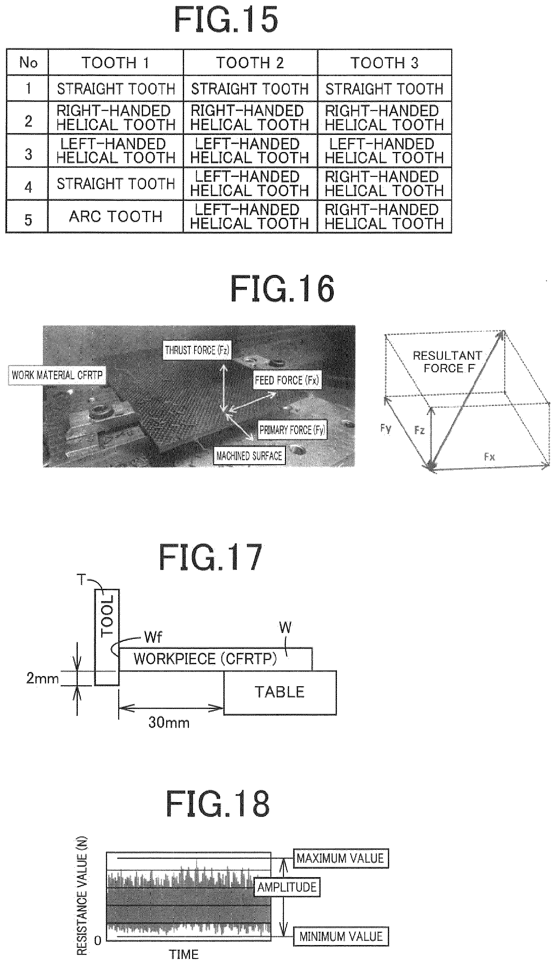

FIG. 15 is a view for explaining comparative tools (test samples Nos.1-4) and a tool of the present invention (test sample No.5), which were used in cutting tests, wherein "TEETH 1-3" define three peripheral cutting edges. The tool of the present invention (test samples No.5) is the end mill 10 in which the three teeth 1-3 are constituted by the curved tooth BS, left-handed helical tooth BL and right-handed helical tooth BR, respectively, which are shown in FIG.2. In the test sample No. 5, the tooth 1 is the arc tooth A of FIG. 3, and the bottom-cutting-edge side width a and the shank-portion side width b are equal to each other and are equal to 0.26mm (a=b=0.26mm) in the tooth 1. The three "TEETH 1-3" of the test sample No. 1 are all straight teeth. The three "TEETH 1-3" of the test sample No.2 are all right-handed helical teeth. The three "TEETH 1-3" of the test sample No.3 are all left-handed helical teeth. Further, the three "TEETH 1-3" of the test sample No.4 are a straight tooth, a left-handed helical tooth and a right-handed helical tooth. Each of the test samples Nos. 1-5 has a tooth length L of 12mm and a tooth diameter Φ of 6mm, and is made of a material in the form of a cemented carbide. Further, each of the test samples Nos.1-5 is covered at its surface with the diamond coating 24. In the test sample No. 5 as well as the test samples Nos. 1-4, the helix angles α, β of the right-handed and left-handed helical teeth are all 5°.

FIG. 16 is a view for explaining a resultant force F of resistance values that is measured in the cutting tests, wherein the resistance values are constituted by a feed force Fx in a direction of feed movement of the tool, a primary force Fy in a direction perpendicular to a machined surface and a thrust force Fz in the tool axial direction (thickness direction of the work material). The resultant force F corresponds to a load applied to the workpiece W. FIG.17 is a view for explaining a positional relationship between the workpiece W and the tool T in the cutting tests in which trimming/cutting operations are performed to an outer circumferential surface of the workpiece W in a position protruding from a table by 30mm. In FIG. 17, "Wf" represents a machined surface. FIG. 18 is a view for explaining an amplitude of the resultant force F of resistance values measured in the cutting tests, wherein the amplitude corresponds a difference between a maximum value and a minimum value of the resultant force F.

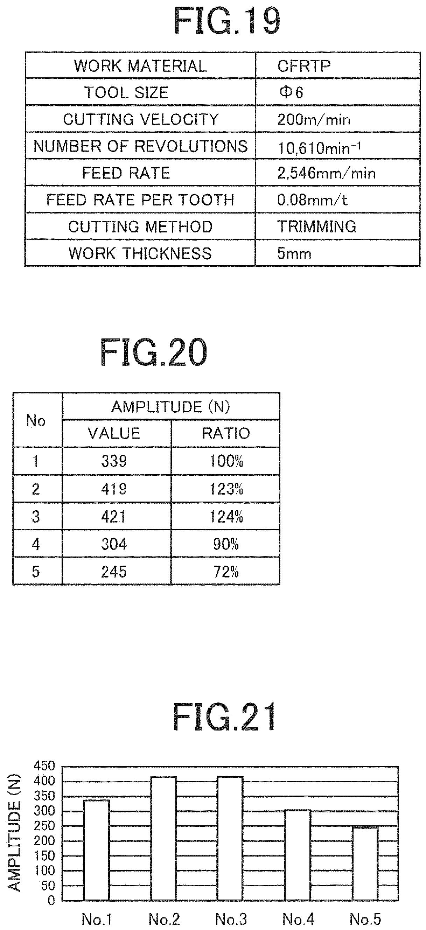

Then, the cutting operations were performed with a machining condition shown in FIG. 19, and the resultant force F was measured. FIG.20 shows results in which the amplitude was obtained based on the measured resultant force F. In FIG. 20, "RATIO (%)" is a value relative to the amplitude in the test sample No.1. FIG.21 is a view showing the values of the amplitude of FIG.20 by a graph in a comparative manner. From the results, it can be understood that the amplitude in the test sample No.5 as the tool of the present invention is smaller than the amplitude in the test sample No. 1 as the comparative tool (in which all of the teeth 1-3 are the straight teeth), by about 28%., and that the amplitude in the test sample No.2 (in which all of the teeth 1-3 are the right-handed helical teeth) and the amplitude in the test sample No.3 (in which all of the teeth 1-3 are the left-handed helical teeth) are larger than the amplitude in the test sample No. 1, by about 23-24%, due to the larger thrust force $F_z$ in the axial direction. Further, from the results, it can be understood that the amplitude in the test sample No.4 (in which the teeth 1-3 are the straight tooth, left-handed helical tooth and right-handed helical tooth, respectively) is smaller than the amplitude in the test sample No.1 by about 10% that is smaller than 28% by which the amplitude in the test sample No.5 as the tool of the present invention is smaller than the amplitude in the test sample No. 1.

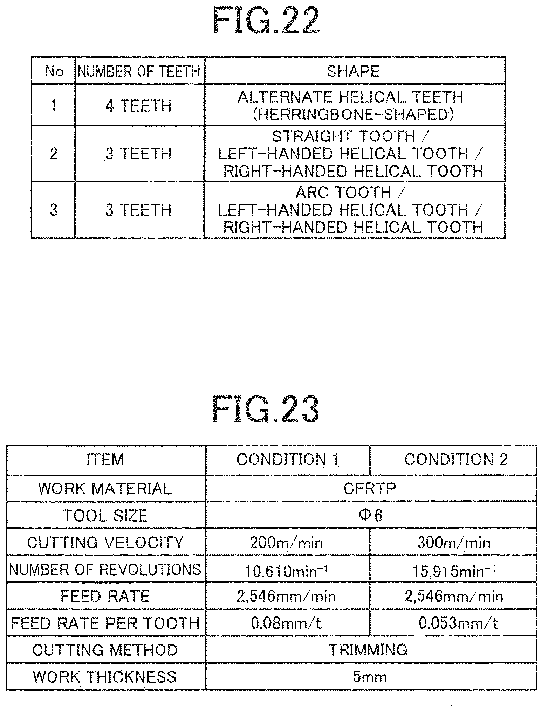

FIGS.22-24 are views for explaining results of other cutting tests. FIG.22 is a view for explaining three kinds of test samples Nos. 1-3. The test sample No. 1 is a herringbone-shaped conventional tool having four teeth. The test sample No.2 is a comparative tool having three teeth as the test sample No.4 of FIG. 15. The test sample No.3 is a tool of the present invention having three teeth as the test sample No.5 of FIG. 15. Each of the test samples Nos. 1-3 has a tooth length L of 12mm and a tooth diameter $\Phi$ of 6mm, and is made of a material in the form of a cemented carbide. Further, each of the test samples Nos. 1-3 is covered at its surface with the diamond coating 24.

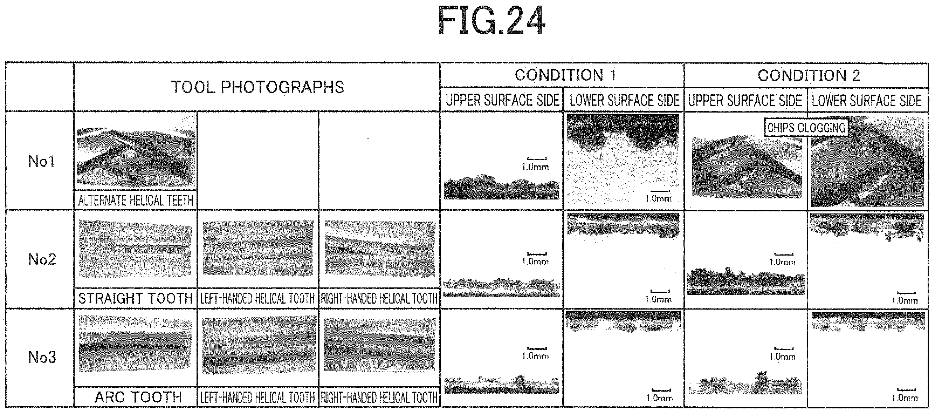

FIG.23 shows two machining conditions (conditions 1 and 2) with which trimming/cutting operations were performed to a work material in the form of CFRTP, and occurrence of the burr was checked. The condition 1 and 2 are different in terms of a cutting velocity and a feed rate per tooth such that the cutting velocity in the condition 2 is higher than that in the condition 1, and the feed rate per tooth in the condition 2 is lower than that in the condition 1. FIG.24 is a set of photographs showing shapes of the teeth of the test samples Nos.1-3 of FIG.22, and occurrence of the burr. From the results, it can be understood that, where the trimming/cutting operations were performed with the conditions 1, in the test sample No.3 as the tool of the present invention, the burr was remarkably smaller than that in the test sample No. 1 as the herringbone-shaped conventional tool, and was smaller than also that in the test sample No.2 as the comparative tool. Where the trimming/cutting operations were performed with the condition 2 in which the cutting velocity is higher and the feed rate per tooth is lower than in the condition 1, the test sample No. 1 as the herringbone-shaped conventional tool was not capable of performing the trimming/cutting operation since chips clogged in portions in which the helical teeth intersect with each other. Further, as where the trimming/cutting operations were performed with the condition 1, where the trimming/cutting operations were performed with the condition 2, the burr was smaller in the test sample No.3 as the tool of the present invention than in the test sample No.2 as the comparative tool.

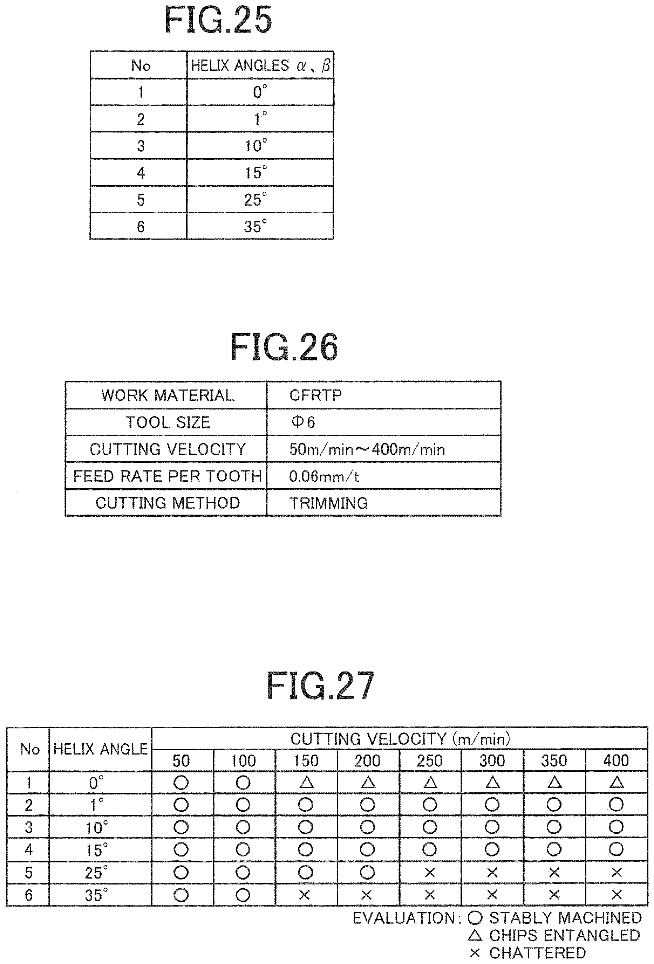

FIGS.25-28 are views for explaining results of still other cutting tests. FIG.25 is a view for explaining six kinds of test samples Nos.1-6. Each of the test samples Nos. 1-6 has three teeth. Each of the test samples Nos.2-6, which are the tools of the present invention as the test sample No.5 of FIG.15, has the curved tooth BS in the form of the arc tooth A of FIG. 3, the right-handed helical tooth BR and the left-handed helical tooth BL, wherein the helix angles $\alpha$, $\beta$ of the respective right-handed and left-handed helical teeth BR, BL vary within a range from 1° to 35°. In the arc tooth A, the bottom-cutting-edge side width a and the shank-portion side width b are equal to each other and are equal to 0.08mm (a=b=0.08mm). The test sample No.1, which is a comparative tool, has, in addition to the arc tooth A, two straight teeth in place of the right-handed and left-handed helical teeth BR, BL, wherein the helix angle of each of the two straight teeth is 0°. Each of the test samples Nos.1-6 has a tooth length L of 3mm and a tooth diameter $\Phi$ of 6mm, and is made of a material in the form of a cemented carbide. Further, each of the test samples Nos.1-6 is covered at its surface with the diamond coating 24.

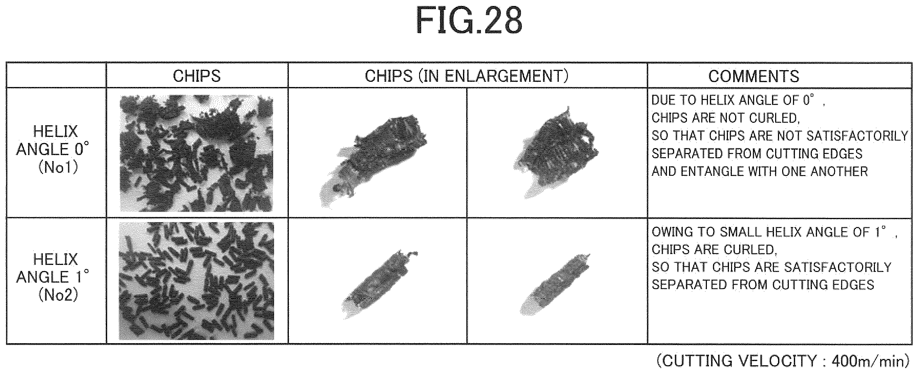

FIG.27 shows results of cutting tests in which cutting operations were performed with various values of a cutting velocity in a machining condition of FIG.26 and then entanglement of chips and chatter vibration were checked. As is clear from FIG.27, in the test sample No. 1 as the comparative tool in which the helix angles are 0°, chips were difficult to be curled, and the entanglement of the chips was seen where the cutting velocity was 150m/min or higher. On the other hand, the test sample No.5 in which the helix angles $\alpha$, $\beta$ are 25° was not capable of performing the cutting operation due to occurrence of the chatter vibration where the cutting velocity was 250m/min or higher. The test sample No.6 in which the helix angles $\alpha$, $\beta$ are 35° was not capable of performing the cutting operation due to occurrence of the chatter vibration where the cutting velocity was 150m/min or higher. That is, in each of the test samples Nos.2-6 as the tools of the present invention in which the helix angles $\alpha$, $\beta$ of the respective right-handed and left-handed helical teeth BR, BL are at least 1°, the entanglement of the chips was not seen as long as the cutting velocity was in a range from 50 m/min to 400m/min. However, where the helix angles $\alpha$, $\beta$ were larger than 15°, the chatter vibration was likely to occur. It is therefore preferable that the helix angles $\alpha$, $\beta$ of the respective right-handed and left-handed helical teeth BR, BL are in range from 1° to 15°. FIG.28 is a set of photographs showing, by way of example, the chips generated where cutting operations were performed at the cutting velocity of 400m/min by the test sample No.1 in which the helix angles $\alpha$, $\beta$ are 0° and the test sample No. 2 in which the helix angles $\alpha$, $\beta$ are 1°. In the test sample No.1 as the comparative tool, the chips were difficult to be curled so that the chips tangled one another so as to be difficult to be evacuated.

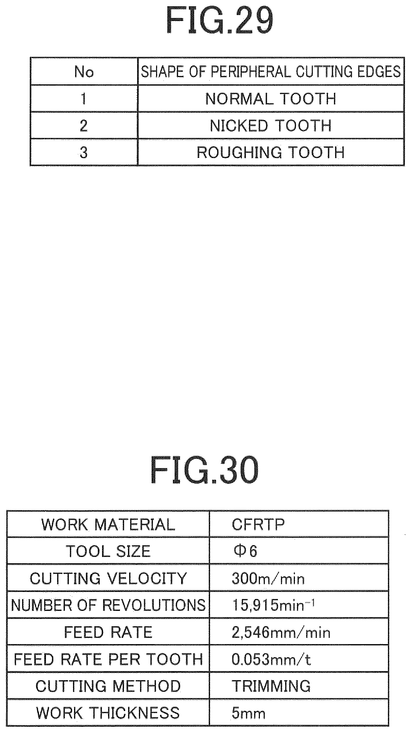

FIGS.29-31 are views for explaining results of still other cutting tests. FIG.29 is a view for explaining three kinds of test samples Nos.1-3 each having three teeth. As shown in the tool images of FIG. 10, each of the test samples Nos.1-3 has the normal teeth 30, nicked teeth 32 or roughing teeth 34 defining the peripheral cutting edges 20. Each of the test samples Nos.1-3, which are tools of the present invention as the test sample No.5 of FIG.15, is provided with the right-handed and left-handed helical teeth BR, BL and the curved tooth BS in the form of the arc tooth A of FIG. 3. In each of the test samples Nos.1-3, the tooth length L is 12mm, and the tooth diameter Φ is 6mm. Each of the test samples Nos.1-3 is made of a cemented carbide, and its surface is covered with the diamond coating 24.

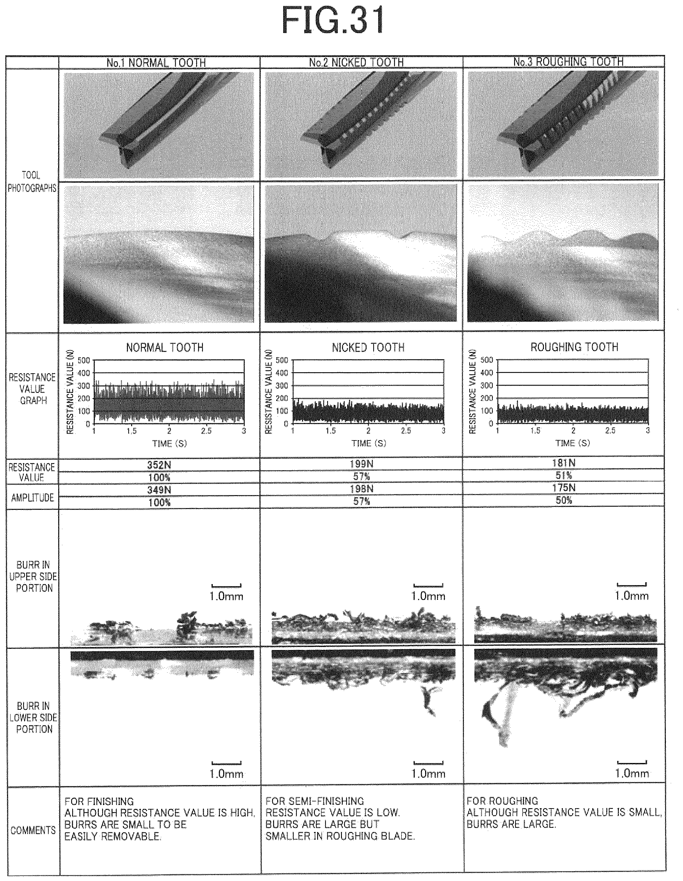

Then, the cutting operations were performed with a machining condition shown in FIG.30, and a vibration waveform of resistance value of the resultant force F, a maximum value and an amplitude of the resultant force F, ratios of the maximum value and the amplitude relative to those in the test sample No.1 that are indicated by 100%, and occurrence of the burr in upper and lower side portions of the machined surface were checked. FIG. 31 shows the obtained results. From the results, it can be understood that the test sample No.3 provided with the roughing teeth 34 can be advantageously used for a roughing operation, for example, because the maximum value and the amplitude of the resultant force F were smaller by about 49-50% although the burrs on the upper and lower side portions were larger, as compared with the test sample No.1 provided with the normal teeth 30. Further, it can be understood that the test sample No.2 provided with the nicked teeth 32 can be advantageously used for a semi-roughing operation, for example, because the maximum value and the amplitude of the resultant force F were smaller by about 43% although the burrs on the upper and lower side portions were larger, as compared with the test sample No.1 provided with the normal teeth 30. The burrs generated in the test sample No.2 were smaller than those generated in the test sample No. 3 provided with the roughing teeth 34.

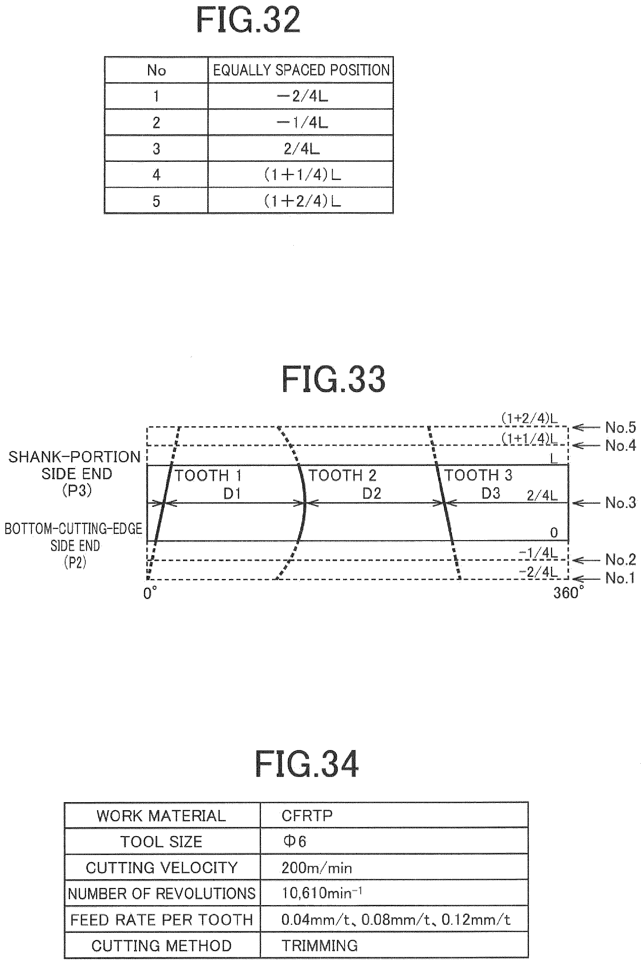

FIGS.32-36 are views for explaining results of still other cutting tests. FIGS. 32 and 33 are views for explaining five kinds of test samples Nos. 1-5 that are different from one another in terms of an equally spaced position in which the three peripheral cutting edges 20 are equally spaced apart from each other. Each of the test samples Nos.1-5, which are tools of the present invention as the test sample No.5 of FIG. 15, is provided with, in addition to the right-handed and left-handed helical teeth BR, BL, the curved tooth BS in the form of the arc tooth A of FIG. 3. The teeth 1-3 of FIG. 33 define the three peripheral cutting edges 20, wherein the tooth 1 is the right-handed helical tooth BR, the tooth 2 is the arc tooth A and the tooth 3 is the left-handed helical tooth BL. In the test sample No.1, the equally spaced position, in which an interval of the teeth 1-3 is constant (D1=D2=D3), is located in a position that is distant from the bottom-cutting-edge side end P2 toward the distal end side by 2/4 of the tooth length L, namely, in a position of -0.5L where the bottom-cutting-edge side end P2 is a reference position and a direction toward the side of the shank portion 12 is positive. In the test sample No. 2, the equally spaced position, in which the interval of the teeth 1-3 is constant (D1=D2=D3), is located in a position that is distant from the bottom-cutting-edge side end P2 toward the distal end side by 1/4 of the tooth length L, namely, in a position of -0.25L where the bottom-cutting-edge side end P2 is the reference position and the direction toward the side of the shank portion 12 is positive. In the test sample No. 3, the equally spaced position, in which the interval of the teeth 1-3 is constant (D1=D2=D3), is located in a position that is distant from the bottom-cutting-edge side end P2 toward the side of the shank portion 12 by 2/4 of the tooth length L, namely, in a center of the tooth length L. In the test sample No. 4, the equally spaced position, in which the interval of the teeth 1-3 is constant (D1=D2=D3), is located in a position that is distant from the shank-portion side end P3 toward the side of the shank portion 12 by 1/4 of the tooth length L, namely, in a position of 1.25L. In the test sample No. 5, the equally spaced position, in which the interval of the teeth 1-3 is constant (D1=D2=D3), is located in a position that is distant from the shank-portion side end P3 toward the side of the shank portion 12 by 2/4 of the tooth length L, namely, in a position of 1.5L. FIG. 33 shows a positional relationship among the teeth 1-3 in the test sample No.3 in which the equally spaced position is located in the position that is distant from the bottom-cutting-edge side end P2 toward the side of the shank portion 12 by 2/4 of the tooth length L. In each of the test samples Nos. 1-5, the tooth length L is 6mm, and the tooth diameter Φ is 6mm. Each of the test samples Nos. 1-5 is made of a cemented carbide, and its surface is covered with the diamond coating 24.

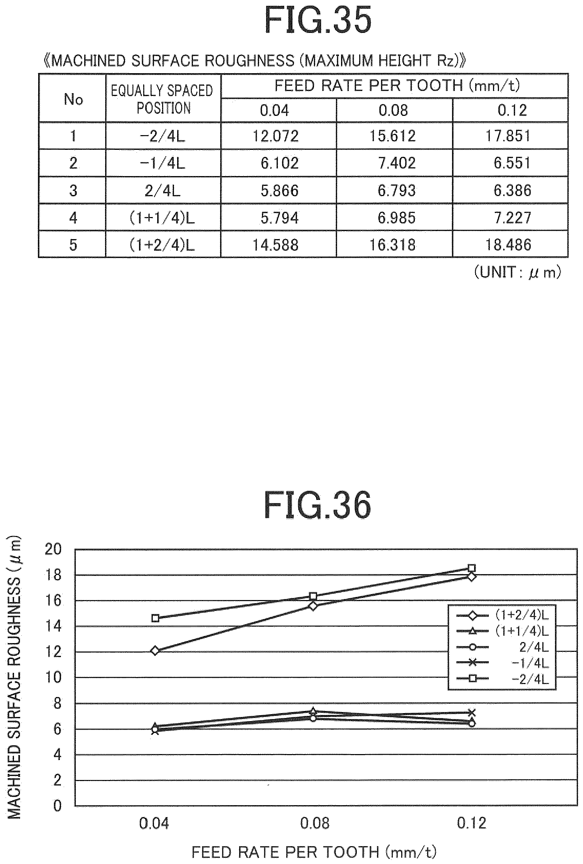

FIGS.35 and 36 shows results of cutting tests in which cutting operations were performed with various values of a feed rate per tooth in a machining condition of FIG.34 and then a maximum height Rz as a machined surface roughness was measured. FIG. 36 is a view showing values of the machined surface roughness by a graph in a comparative manner. From the results, it can be understood that in the test samples Nos.1 and 5 in which the equally spaced position is located in -0.5L and 1.5L, respectively, where the bottom-cutting-edge side end P2 is the reference position and the direction toward the side of the shank portion 12 is positive, the machined surface roughness is larger than 12μm as long as the feed rate per tooth is in a whole range from 0.04mm/t to 0.12mm/t, and is increased as the feed rate per tooth is increased. On the other hand, in the test samples Nos.2-4 in which the equally spaced position is located in a region from -0.25L to 1.25L, where the bottom-cutting-edge side end P2 is the reference position and the direction toward the side of the shank portion 12 is positive, the machined surface roughness is in a range about from 5μm to 8μm as long as the feed rate per tooth is in the whole range from 0.04mm/t to 0.12mm/t, and is about 40%-50% of the machined surface roughness in the test samples Nos.1 and 5. From the results, it can be understood that the equally spaced position is preferably located in the region from -0.25L to 1.25L, where the bottom-cutting-edge side end P2 is the reference position and the direction toward the side of the shank portion 12 is positive, namely, in the region between a position distant from the bottom-cutting-edge side end P2 toward the distal end side by 1/4 of the tooth length L and a position distant from the shank-portion side end P3 toward the side of the shank portion 12 by 1/4 of the tooth length L.

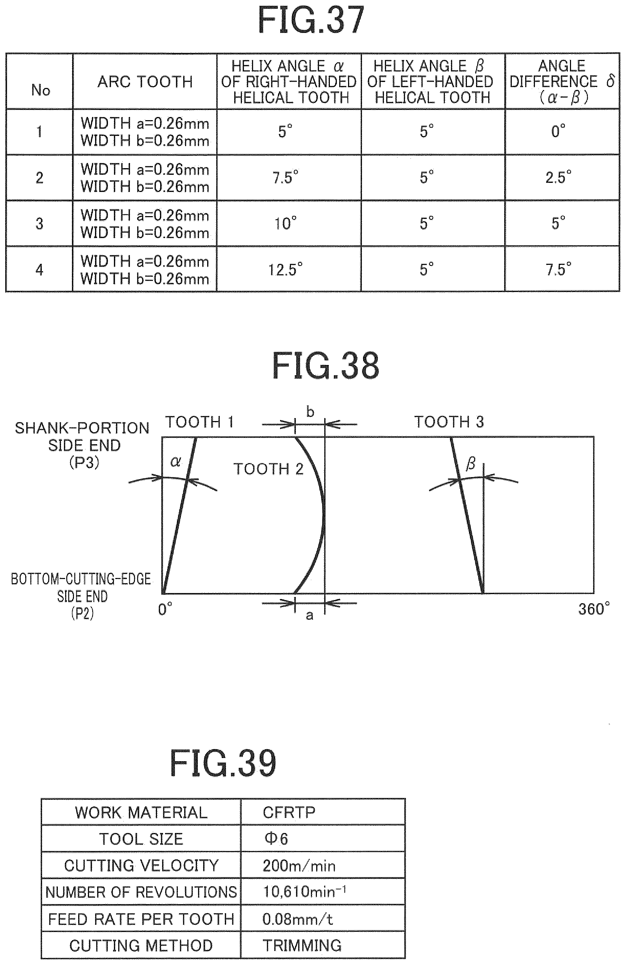

FIGS.37-40 are views for explaining results of still other cutting tests. FIGS. 37 and 38 are views for explaining four kinds of test samples Nos.1-4 that are different from one another in terms of the angle difference δ between the helix angles α, β of the right-handed and left-handed helical teeth BR, BL. Each of the test samples Nos.1-4, which are tools of the present invention as the test sample No.5 of FIG. 15, is provided with, in addition to the right-handed and left-handed helical teeth BR, BL, the curved tooth BS in the form of the arc tooth A of FIG. 3. The teeth 1-3 of FIG. 38 define the three peripheral cutting edges 20, wherein the tooth 1 is the right-handed helical tooth BR, the tooth 2 is the arc tooth A and the tooth 3 is the left-handed helical tooth BL. In the arc tooth A, the circumferential widths a, b are equal to each other and are 0.26mm (a=b=0.26mm). In the test sample No.1, the helix angle α of the right-handed helical tooth BR is 5° and the helix angle β of the left-handed helical tooth BL is 5°so that the angle difference δ is 0°. In the test sample No.2, the helix angle α of the right-handed helical tooth BR is 7.5° and the helix angle β of the left-handed helical tooth BL is 5° so that the angle difference δ is 2.5°. In the test sample No.3, the helix angle α of the right-handed helical tooth BR is 10° and the helix angle β of the left-handed helical tooth BL is 5° so that the angle difference δ is 5°. In the test sample No.4, the helix angle α of the right-handed helical tooth BR is 12.5° and the helix angle β of the left-handed helical tooth BL is 5° so that the angle difference δ is 7.5°. In each of the test samples Nos. 1-4, the tooth length L is 12mm, and the tooth diameter Φ is 6mm. Each of the test samples Nos.1-4 is made of a cemented carbide, and its surface is covered with the diamond coating 24.

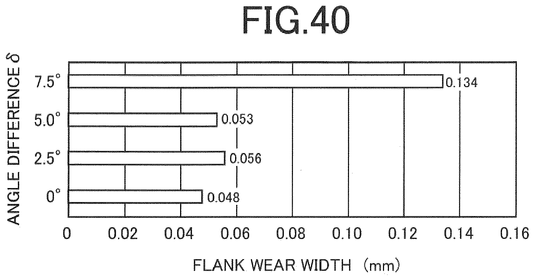

FIG.40 shows results of cutting tests in which cutting operations were performed with a machining condition of FIG.39 and then the flank wear width was measured. As is clear from the test results, it can be understood that the flank wear width is larger than 0.13mm in the test sample No.4 in which the angle difference δ is 7.5°, and that the flank wear width is smaller than 0.06mm in the test samples Nos.1-3 in which the angle difference δ ranges from 0° to 5°, so that the flank wear width in the test samples Nos. 1-3 is smaller than 50% of the flank wear width in the test sample No.4. Thus, an excellent tool life can be obtained with the angle difference δ ranging from 0° to 5°. From the results, it can be understood that the angle difference δ between the helix angles α, β of the right-handed and left-handed helical teeth BR, BL is preferably within ±5°.

While the embodiment of the present invention has been described in detail by reference to the accompanying drawings, it is to be understood that the described embodiment is merely an embodied form and that the present invention can be embodied with various modifications and improvements on the basis of knowledge of those skilled in the art.

DESCRIPTION OF REFERENCE SIGNS

10: end mill
12: shank portion
14: tooth portion
20a: peripheral cutting edge (curved tooth)
20b: peripheral cutting edge (left-handed helical tooth)
20c: peripheral cutting edge (right-handed helical tooth)
22a, 22b, 22c: bottom cutting edge (with center edge portion)
24: diamond coating
30a, 30b, 30c: normal tooth
32a, 32b, 32c: nicked tooth
34a, 34b, 34c: roughing tooth
42a, 42b, 42c: bottom cutting edge (without center edge portion)
44a, 44b: bottom cutting edge (without center edge portion)
44c: bottom cutting edge (with center edge portion)
46a, 46b, 46c: bottom cutting edge (with center edge portion)
BS: curved tooth
BL: left-handed helical tooth
BR: right-handed helical tooth
α: helix angle of right-handed helical tooth
β: helix angle of left-handed helical tooth
δ: angle difference
L: tooth length
P2: bottom-cutting-edge side end
P3: shank-portion side end

**Claims**

1. An end mill comprising a plurality of peripheral cutting edges, the end mill being **characterized in that**:

   the peripheral cutting edges are defined by three types of teeth including a right-handed helical tooth that is twisted rightward, a left-handed helical tooth that is twisted leftward, and a curved tooth which is twisted in a direction reversed right and left on a way thereof and which has a curved shape curved in an arcuate or arched manner in a development view of an outer circumferential surface of the end mill around an axis such that a corresponding one of the peripheral cutting edges is provided on a concave side of the curved shape, and

each adjacent pair of the peripheral cutting edges adjacent to each other are defined by the respective teeth that are different in type from each other.

2. The end mill according to claim 1, being **characterized in that**:

   the right-handed helical tooth has a helix angle ranging from 1° to 15°, and
   the left-handed helical tooth has a helix angle ranging from 1° to 15°.

3. The end mill according to claim 1 or 2, being **characterized in that** the peripheral cutting edges are defined by one kind of teeth selected from among normal teeth, nicked teeth and roughing teeth.

4. The end mill according to any one of claims 1-3, being **characterized in that**, where it is assumed that each of the peripheral cutting edges conceptually extends in an axial direction of the end mill with a constant helix angle or a constant curvature, the peripheral cutting edges are equally spaced in a circumferential direction, in an equally spaced position that is located in a region between a position that is distant from a bottom-cutting-edge side end of the peripheral cutting edges toward a distal end side of the peripheral cutting edges by 1/4 of a tooth length and a position that is distant from a shank-portion side end toward a shank-portion side by 1/4 of the tooth length.

5. The end mill according to any one of claims 1-4, being **characterized in that** an angle difference between a helix angle of the right-handed helical tooth and a helix angle of the left-handed helical tooth is within ± 5°.

6. The end mill according to any one of claims 1-5, being **characterized in that** at least one of a plurality of bottom cutting edges, which are contiguous to the respective peripheral cutting edges and are provided in a distal end portion of the end mill, includes a center edge portion that reaches a vicinity of the axis.

7. The end mill according to any one of claims 1-6, being **characterized in that** a number of the peripheral cutting edges is not smaller than three and is not larger than six.

8. The end mill according to any one of claims 1-7, being **characterized in that** a surface of a tooth portion, which is provided with the peripheral cutting edges, is covered with a diamond coating.

9. The end mill according to any one of claims 1-8, being **characterized in that** the end mill is made of a cemented carbide.

# FIG.1

# FIG.2

| PERSPECTIVE VIEW | BS | BL | BR |
|---|---|---|---|
| | CURVED TOOTH | LEFT-HANDED HELICAL TOOTH | RIGHT-HANDED HELICAL TOOTH |
| | | | |

# FIG.3

| ARC TOOTH A | ARC TOOTH B | ARC TOOTH C |
|:---:|:---:|:---:|
| a＝b | a＞b | a＜b |

# FIG.4

| 0% | 5% | 50% | 95% | 100% |
|:---:|:---:|:---:|:---:|:---:|

EP 4 252 945 A1

# FIG.5

| TOOTH A | TOOTH B | TOOTH C | TOOTH D | TOOTH E |
|---|---|---|---|---|
| ARC TOOTH $a=b$ | ARC TOOTH $a>b$ | ARC TOOTH $a<b$ | ARC TOOTH $a=b$ (SMALL) | ARC TOOTH $a=b$ (LARGE) |
| | | | | |

| TOOTH F | TOOTH G | TOOTH H |
|---|---|---|
| PLURALITY OF CURVED LINES $a=b$ | PLURALITY OF CURVED LINES $a>b$ | PLURALITY OF CURVED LINES $a<b$ |
| | | |

17

# FIG.6

《THREE TEETH》

| No | TOOTH 1 | TOOTH 2 | TOOTH 3 |
|---|---|---|---|
| 1 | RIGHT TWIST | ARC | LEFT TWIST |
| 2 | RIGHT TWIST | LEFT TWIST | ARC |

# FIG.7

《FOUR TEETH》

| No | TOOTH 1 | TOOTH 2 | TOOTH 3 | TOOTH 4 |
|---|---|---|---|---|
| 1 | RIGHT TWIST | ARC | LEFT TWIST | ARC |
| 2 | ARC | LEFT TWIST | RIGHT TWIST | LEFT TWIST |
| 3 | LEFT TWIST | RIGHT TWIST | ARC | RIGHT TWIST |

# FIG.8

《FIVE TEETH》

| No | TOOTH 1 | TOOTH 2 | TOOTH 3 | TOOTH 4 | TOOTH 5 |
|---|---|---|---|---|---|
| 1 | RIGHT TWIST | ARC | LEFT TWIST | ARC | LEFT TWIST |
| 2 | RIGHT TWIST | LEFT TWIST | ARC | LEFT TWIST | ARC |
| 3 | ARC | RIGHT TWIST | LEFT TWIST | RIGHT TWIST | LEFT TWIST |
| 4 | ARC | LEFT TWIST | RIGHT TWIST | LEFT TWIST | RIGHT TWIST |
| 5 | LEFT TWIST | ARC | RIGHT TWIST | ARC | RIGHT TWIST |
| 6 | LEFT TWIST | RIGHT TWIST | ARC | RIGHT TWIST | ARC |

# FIG.9

《SIX TEETH》

| No | TOOTH 1 | TOOTH 2 | TOOTH 3 | TOOTH 4 | TOOTH 5 | TOOTH 6 |
|---|---|---|---|---|---|---|
| 1 | RIGHT TWIST | ARC | LEFT TWIST | RIGHT TWIST | ARC | LEFT TWIST |
| 2 | RIGHT TWIST | LEFT TWIST | ARC | RIGHT TWIST | LEFT TWIST | ARC |
| 3 | RIGHT TWIST | ARC | RIGHT TWIST | ARC | RIGHT TWIST | LEFT TWIST |
| 4 | RIGHT TWIST | LEFT TWIST | RIGHT TWIST | LEFT TWIST | RIGHT TWIST | ARC |
| 5 | ARC | RIGHT TWIST | ARC | RIGHT TWIST | ARC | LEFT TWIST |
| 6 | ARC | LEFT TWIST | ARC | LEFT TWIST | ARC | RIGHT TWIST |
| 7 | LEFT TWIST | RIGHT TWIST | LEFT TWIST | RIGHT TWIST | LEFT TWIST | ARC |
| 8 | LEFT TWIST | ARC | LEFT TWIST | ARC | LEFT TWIST | RIGHT TWIST |

# FIG.10

| NORMAL TOOTH | NICKED TOOTH | ROUGHING TOOTH |
|---|---|---|

# FIG.11

TOOTH 1　　TOOTH 2　　　　　TOOTH 3　　(1+1/4)L　TOOTH 1

SHANK-PORTION
SIDE END
(P3)

BOTTOM-CUTTING-EDGE
SIDE END
(P2)

D1　　　　　　D2　　　　　　D3

L

2/4L

D1=D2=D3

0

-1/4L

0°　　　　　　　　　　　　　　　　　　360°

# FIG.12

| WITHOUT CENTER EDGE PORTIONS | WITH CENTER EDGE PORTIONS | |
|---|---|---|
| 42c　　42a | 44c　　44a | 46c　　46a |
| 42b | 44b | 46b |

20

# FIG.13

| TOOL OF INVENTION | CONVENTIONAL TOOL |
|---|---|
| TOOTH 1  TOOTH 2  TOOTH 3<br><br>0°                    360° | TOOTH 1  TOOTH 2  TOOTH 1  TOOTH 2<br><br>0°                    360° |
| CUTTING DIRECTION<br>W | CUTTING DIRECTION<br>W |

# FIG.14

| ALIGNED POSITION | MISALIGNMENT 1 | MISALIGNMENT 2 |
|---|---|---|
| 52<br><br>W<br>CUTTING DIRECTION<br>50 | 52<br><br>50<br>CUTTING DIRECTION<br>W | W  52<br><br>CUTTING DIRECTION  50 |

# FIG.15

| No | TOOTH 1 | TOOTH 2 | TOOTH 3 |
|---|---|---|---|
| 1 | STRAIGHT TOOTH | STRAIGHT TOOTH | STRAIGHT TOOTH |
| 2 | RIGHT-HANDED HELICAL TOOTH | RIGHT-HANDED HELICAL TOOTH | RIGHT-HANDED HELICAL TOOTH |
| 3 | LEFT-HANDED HELICAL TOOTH | LEFT-HANDED HELICAL TOOTH | LEFT-HANDED HELICAL TOOTH |
| 4 | STRAIGHT TOOTH | LEFT-HANDED HELICAL TOOTH | RIGHT-HANDED HELICAL TOOTH |
| 5 | ARC TOOTH | LEFT-HANDED HELICAL TOOTH | RIGHT-HANDED HELICAL TOOTH |

# FIG.16

# FIG.17

# FIG.18

# FIG.19

| WORK MATERIAL | CFRTP |
|---|---|
| TOOL SIZE | Φ6 |
| CUTTING VELOCITY | 200m/min |
| NUMBER OF REVOLUTIONS | 10,610min$^{-1}$ |
| FEED RATE | 2,546mm/min |
| FEED RATE PER TOOTH | 0.08mm/t |
| CUTTING METHOD | TRIMMING |
| WORK THICKNESS | 5mm |

# FIG.20

| No | AMPLITUDE (N) | |
|---|---|---|
| | VALUE | RATIO |
| 1 | 339 | 100% |
| 2 | 419 | 123% |
| 3 | 421 | 124% |
| 4 | 304 | 90% |
| 5 | 245 | 72% |

# FIG.21

# FIG.22

| No | NUMBER OF TEETH | SHAPE |
|---|---|---|
| 1 | 4 TEETH | ALTERNATE HELICAL TEETH (HERRINGBONE-SHAPED) |
| 2 | 3 TEETH | STRAIGHT TOOTH / LEFT-HANDED HELICAL TOOTH / RIGHT-HANDED HELICAL TOOTH |
| 3 | 3 TEETH | ARC TOOTH / LEFT-HANDED HELICAL TOOTH / RIGHT-HANDED HELICAL TOOTH |

# FIG.23

| ITEM | CONDITION 1 | CONDITION 2 |
|---|---|---|
| WORK MATERIAL | CFRTP | |
| TOOL SIZE | Φ6 | |
| CUTTING VELOCITY | 200m/min | 300m/min |
| NUMBER OF REVOLUTIONS | 10,610min$^{-1}$ | 15,915min$^{-1}$ |
| FEED RATE | 2,546mm/min | 2,546mm/min |
| FEED RATE PER TOOTH | 0.08mm/t | 0.053mm/t |
| CUTTING METHOD | TRIMMING | |
| WORK THICKNESS | 5mm | |

# FIG.24

| | TOOL PHOTOGRAPHS | | | CONDITION 1 | | CONDITION 2 | |
|---|---|---|---|---|---|---|---|
| | | | | UPPER SURFACE SIDE | LOWER SURFACE SIDE | UPPER SURFACE SIDE | LOWER SURFACE SIDE |
| No1 | ALTERNATE HELICAL TEETH | | | 1.0mm | 1.0mm | CHIPS CLOGGING | |
| No2 | STRAIGHT TOOTH | LEFT-HANDED HELICAL TOOTH | RIGHT-HANDED HELICAL TOOTH | 1.0mm | 1.0mm | 1.0mm | 1.0mm |
| No3 | ARC TOOTH | LEFT-HANDED HELICAL TOOTH | RIGHT-HANDED HELICAL TOOTH | 1.0mm | 1.0mm | 1.0mm | 1.0mm |

# FIG.25

| No | HELIX ANGLES $\alpha$、$\beta$ |
|----|----|
| 1 | 0° |
| 2 | 1° |
| 3 | 10° |
| 4 | 15° |
| 5 | 25° |
| 6 | 35° |

# FIG.26

| WORK MATERIAL | CFRTP |
|----|----|
| TOOL SIZE | Φ6 |
| CUTTING VELOCITY | 50m/min～400m/min |
| FEED RATE PER TOOTH | 0.06mm/t |
| CUTTING METHOD | TRIMMING |

# FIG.27

| No | HELIX ANGLE | CUTTING VELOCITY (m/min) | | | | | | | |
|----|----|----|----|----|----|----|----|----|----|
| | | 50 | 100 | 150 | 200 | 250 | 300 | 350 | 400 |
| 1 | 0° | ○ | ○ | △ | △ | △ | △ | △ | △ |
| 2 | 1° | ○ | ○ | ○ | ○ | ○ | ○ | ○ | ○ |
| 3 | 10° | ○ | ○ | ○ | ○ | ○ | ○ | ○ | ○ |
| 4 | 15° | ○ | ○ | ○ | ○ | ○ | ○ | ○ | ○ |
| 5 | 25° | ○ | ○ | ○ | ○ | × | × | × | × |
| 6 | 35° | ○ | ○ | × | × | × | × | × | × |

EVALUATION: ○ STABLY MACHINED
△ CHIPS ENTANGLED
× CHATTERED

# FIG.28

| | CHIPS | CHIPS (IN ENLARGEMENT) | | COMMENTS |
|---|---|---|---|---|
| HELIX ANGLE 0° (No1) | | | | DUE TO HELIX ANGLE OF 0°, CHIPS ARE NOT CURLED, SO THAT CHIPS ARE NOT SATISFACTORILY SEPARATED FROM CUTTING EDGES AND ENTANGLE WITH ONE ANOTHER |
| HELIX ANGLE 1° (No2) | | | | OWING TO SMALL HELIX ANGLE OF 1°, CHIPS ARE CURLED, SO THAT CHIPS ARE SATISFACTORILY SEPARATED FROM CUTTING EDGES |

(CUTTING VELOCITY : 400m/min)

# FIG.29

| No | SHAPE OF PERIPHERAL CUTTING EDGES |
|----|-----------------------------------|
| 1  | NORMAL TOOTH                      |
| 2  | NICKED TOOTH                      |
| 3  | ROUGHING TOOTH                    |

# FIG.30

| WORK MATERIAL | CFRTP |
|---------------|-------|
| TOOL SIZE | Φ6 |
| CUTTING VELOCITY | 300m/min |
| NUMBER OF REVOLUTIONS | 15,915min$^{-1}$ |
| FEED RATE | 2,546mm/min |
| FEED RATE PER TOOTH | 0.053mm/t |
| CUTTING METHOD | TRIMMING |
| WORK THICKNESS | 5mm |

# FIG.31

| | No.1 NORMAL TOOTH | No.2 NICKED TOOTH | No.3 ROUGHING TOOTH |
|---|---|---|---|
| TOOL PHOTOGRAPHS | | | |
| RESISTANCE VALUE GRAPH | NORMAL TOOTH | NICKED TOOTH | ROUGHING TOOTH |
| RESISTANCE VALUE | 352N | 199N | 181N |
| | 100% | 57% | 51% |
| AMPLITUDE | 349N | 198N | 175N |
| | 100% | 57% | 50% |
| BURR IN UPPER SIDE PORTION | 1.0mm | 1.0mm | 1.0mm |
| BURR IN LOWER SIDE PORTION | 1.0mm | 1.0mm | 1.0mm |
| COMMENTS | FOR FINISHING ALTHOUGH RESISTANCE VALUE IS HIGH, BURRS ARE SMALL TO BE EASILY REMOVABLE. | FOR SEMI-FINISHING RESISTANCE VALUE IS LOW. BURRS ARE LARGE BUT SMALLER IN ROUGHING BLADE. | FOR ROUGHING ALTHOUGH RESISTANCE VALUE IS SMALL, BURRS ARE LARGE. |

## FIG.32

| No | EQUALLY SPACED POSITION |
|---|---|
| 1 | $-2/4L$ |
| 2 | $-1/4L$ |
| 3 | $2/4L$ |
| 4 | $(1+1/4)L$ |
| 5 | $(1+2/4)L$ |

## FIG.33

## FIG.34

| WORK MATERIAL | CFRTP |
|---|---|
| TOOL SIZE | $\Phi6$ |
| CUTTING VELOCITY | 200m/min |
| NUMBER OF REVOLUTIONS | $10,610\text{min}^{-1}$ |
| FEED RATE PER TOOTH | 0.04mm/t、0.08mm/t、0.12mm/t |
| CUTTING METHOD | TRIMMING |

# FIG.35

《MACHINED SURFACE ROUGHNESS (MAXIMUM HEIGHT Rz)》

| No | EQUALLY SPACED POSITION | FEED RATE PER TOOTH (mm/t) | | |
|---|---|---|---|---|
| | | 0.04 | 0.08 | 0.12 |
| 1 | −2/4L | 12.072 | 15.612 | 17.851 |
| 2 | −1/4L | 6.102 | 7.402 | 6.551 |
| 3 | 2/4L | 5.866 | 6.793 | 6.386 |
| 4 | (1+1/4)L | 5.794 | 6.985 | 7.227 |
| 5 | (1+2/4)L | 14.588 | 16.318 | 18.486 |

(UNIT : $\mu$ m)

# FIG.36

# FIG.37

| No | ARC TOOTH | HELIX ANGLE $\alpha$ OF RIGHT-HANDED HELICAL TOOTH | HELIX ANGLE $\beta$ OF LEFT-HANDED HELICAL TOOTH | ANGLE DIFFERENCE $\delta$ ($\alpha - \beta$) |
|---|---|---|---|---|
| 1 | WIDTH a=0.26mm WIDTH b=0.26mm | 5° | 5° | 0° |
| 2 | WIDTH a=0.26mm WIDTH b=0.26mm | 7.5° | 5° | 2.5° |
| 3 | WIDTH a=0.26mm WIDTH b=0.26mm | 10° | 5° | 5° |
| 4 | WIDTH a=0.26mm WIDTH b=0.26mm | 12.5° | 5° | 7.5° |

# FIG.38

# FIG.39

| WORK MATERIAL | CFRTP |
|---|---|
| TOOL SIZE | Φ6 |
| CUTTING VELOCITY | 200m/min |
| NUMBER OF REVOLUTIONS | 10,610min$^{-1}$ |
| FEED RATE PER TOOTH | 0.08mm/t |
| CUTTING METHOD | TRIMMING |

# FIG.40

<table>
<tr><td colspan="3" align="center">**INTERNATIONAL SEARCH REPORT**</td><td colspan="2">International application No.<br>PCT/JP2020/044553</td></tr>
</table>

A. CLASSIFICATION OF SUBJECT MATTER
B23C 5/10(2006.01)i
FI: B23C5/10 Z
According to International Patent Classification (IPC) or to both national classification and IPC

B. FIELDS SEARCHED

Minimum documentation searched (classification system followed by classification symbols)
B23C5/10

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/049252 A1 (SUMITOMO ELECTRIC HARDMETAL CORPORATION) 14 March 2019 (2019-03-14) fig. 1-7 | 1-9 |
| A | JP 54-119198 A (NIPPON KOGU SEISAKUSHO KK) 14 September 1979 (1979-09-14) fig. 1-8 | 1-9 |
| A | JP 61-142009 A (TOSHIBA CORP.) 28 June 1986 (1986-06-28) fig. 1-10 | 1-9 |
| A | JP 2015-000467 A (HITACHI TOOL ENGINEERING, LTD.) 05 January 2015 (2015-01-05) fig. 1-20 | 1-9 |
| A | JP 2013-022657 A (NACHI-FUJIKOSHI CORP.) 04 February 2013 (2013-02-04) fig. 1-7 | 1-9 |
| A | JP 63-047007 A (IZUMO SANGYOU CO., LTD.) 27 February 1988 (1988-02-27) fig. 1-5 | 1-9 |
| A | WO 2009/122937 A1 (SUMITOMO ELECTRIC HARDMETAL CORPORATION) 08 October 2009 (2009-10-08) fig. 1-13 | 1-9 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 January 2021 (13.01.2021) | 02 February 2021 (02.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

34

**INTERNATIONAL SEARCH REPORT**
Information on patent family members

| International application no. |
| --- |
| PCT/JP2020/044553 |

| Patent Documents referred in the Report | Publication Date | Patent Family | Publication Date |
| --- | --- | --- | --- |
| WO 2019/049252 A1 | 14 Mar. 2019 | CN 111050964 A | |
| JP 54-119198 A | 14 Sep. 1979 | US 4227837 A fig. 1-8 | |
| JP 61-142009 A | 28 Jun. 1986 | (Family: none) | |
| JP 2015-000467 A | 05 Jan. 2015 | (Family: none) | |
| JP 2013-022657 A | 04 Feb. 2013 | (Family: none) | |
| JP 63-047007 A | 27 Feb. 1988 | (Family: none) | |
| WO 2009/122937 A1 | 08 Oct. 2009 | US 2010/0196108 A1 fig. 1-13 | |

Form PCT/ISA/210 (patent family annex) (January 2015)

**REFERENCES CITED IN THE DESCRIPTION**

**Patent documents cited in the description**

- JP 2013022657 A

- WO 2009122937 A1